(19) Europäisches Patentamt
European Patent Office
Office européen des brevets

(11) **EP 2 332 646 B1**

(12) **EUROPEAN PATENT SPECIFICATION**

(45) Date of publication and mention
of the grant of the patent:
**15.07.2020 Bulletin 2020/29**

(21) Application number: **09814634.3**

(22) Date of filing: **17.09.2009**

(51) Int Cl.:
*B01J 23/88* (2006.01)   *B01D 53/86* (2006.01)
*B01J 23/28* (2006.01)   *B01J 23/34* (2006.01)
*B01J 23/75* (2006.01)   *B01J 23/755* (2006.01)
*B01J 23/76* (2006.01)   *B01J 23/78* (2006.01)
*B01J 23/80* (2006.01)   *B01J 23/85* (2006.01)
*B01J 27/24* (2006.01)   *C01B 3/04* (2006.01)

(86) International application number:
**PCT/JP2009/066268**

(87) International publication number:
**WO 2010/032790 (25.03.2010 Gazette 2010/12)**

(54) **CATALYST FOR AMMONIA DECOMPOSITION, PROCESS FOR PRODUCING SAME, AND METHOD OF TREATING AMMONIA**

KATALYSATOR FÜR AMMONIAKZERSETZUNG, HERSTELLUNGSVERFAHREN DAFÜR UND VERFAHREN ZUR BEHANDLUNG VON AMMONIAK

CATALYSEUR DE DÉCOMPOSITION DE L'AMMONIAC, SON PROCÉDÉ D'ÉLABORATION ET MÉTHODE DE TRAITEMENT DE L'AMMONIAC

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **17.09.2008 JP 2008238180**
**17.09.2008 JP 2008238184**
**17.09.2008 JP 2008238189**

(43) Date of publication of application:
**15.06.2011 Bulletin 2011/24**

(73) Proprietor: **Nippon Shokubai Co., Ltd.**
**Osaka-shi, Osaka 541-0043 (JP)**

(72) Inventors:
• **OKAMURA, Junji**
**Himeji-shi**
**Hyogo 671-1292 (JP)**
• **KIRISHIKI, Masaru**
**Suita-shi**
**Osaka 564-8512 (JP)**
• **YOSHIMUNE, Masanori**
**Suita-shi**
**Osaka 564-8512 (JP)**
• **TSUNEKI, Hideaki**
**Suita-shi**
**Osaka 564-8512 (JP)**

(74) Representative: **Müller-Boré & Partner**
**Patentanwälte PartG mbB**
**Friedenheimer Brücke 21**
**80639 München (DE)**

(56) References cited:
**WO-A2-2007/119262    GB-A- 1 000 772**
**JP-A- 2004 307 326    JP-B- 35 008 930**
**JP-B- 48 042 794    US-A1- 2001 031 236**

• **PRAKASH BISWAS ET AL: "Steam reforming of ethanol on Ni-CeO2-ZrO2 catalysts: Effect of doping with copper, cobalt and calcium", CATALYSIS LETTERS, KLUWER ACADEMIC PUBLISHERS-PLENUM PUBLISHERS, NE, vol. 118, no. 1-2, 16 May 2007 (2007-05-16), pages 36-49, XP019524766, ISSN: 1572-879X, DOI: 10.1007/S10562-007-9133-6**

**Description**

The present invention relates to the use of catalysts for decomposing ammonia into nitrogen and hydrogen.

Ammonia has an odor, particularly an irritating malodor, and therefore, if ammonia at or above an odor threshold is contained in a gas, the ammonia needs to be treated. In response, conventionally, various ammonia treatment methods have been studied. For example, proposals have been made for a method of bringing ammonia into contact with oxygen to oxidize the ammonia into nitrogen and water; and a method of decomposing ammonia into nitrogen and hydrogen.

For example, Patent Document 1 discloses an ammonia treatment method of using, for example, a platinum-alumina catalyst, a manganese-alumina catalyst, or a cobalt-alumina catalyst, in order to oxidize ammonia produced in a coke oven into nitrogen and water, and using, for example, an iron-alumina catalyst or a nickel-alumina catalyst, in order to decompose ammonia produced in a coke oven into nitrogen and hydrogen. This ammonia treatment method, however, often produces NOx as a by-product, and therefore newly requires an NOx treatment facility. Thus, the method is unfavorable.

Further, Patent Document 2 discloses an ammonia treatment method of using a catalyst obtained by supporting nickel or nickel oxide on a metal oxide carrier, such as alumina, silica, titania, or zirconia; and further adding at least either one of an alkaline earth metal and a lanthanoid element in the form of a metal or an oxide, in order to decompose ammonia produced in an organic waste treatment process into nitrogen and hydrogen. This ammonia treatment method, however, has a low ammonia decomposition rate, and therefore is not practicable.

Further, Patent Document 3 discloses an ammonia treatment method of using a catalyst obtained by adding a basic compound of an alkali metal or an alkaline earth metal to ruthenium on an alumina carrier, in order to decompose ammonia produced in a coke oven into nitrogen and hydrogen. This ammonia treatment method has the advantage of being able to decompose ammonia at lower temperatures than the conventional iron-alumina catalysts and the like, but uses ruthenium, which is a rare noble metal, as active metal species. Thus, the method has a major problem in view of cost, and therefore is not practicable.

As well as the above, the use of hydrogen recovered from ammonia decomposition as a hydrogen source for fuel cells has been studied. In this case, however, it is necessary to obtain high-purity hydrogen. To obtain high-purity hydrogen using conventionally proposed ammonia decomposition catalysts, very high reaction temperatures are required, or numerous costly catalysts need to be used.

To solve such a problem, as a catalyst capable of decomposing ammonia at relatively low temperatures (from about 400°C to about 500°C), for example, Patent Document 4 discloses an iron-ceria compound; Patent Document 5 discloses tertiary compounds, such as nickel-lanthanum oxide/alumina, nickel-yttria/alumina, and nickel-ceria/alumina; and Non-patent Document 1 discloses a tertiary compound, such as iron-ceria/zirconia.

The ammonia decomposition rates of all these catalysts, however, are measured under the conditions that a treatment gas has a low ammonia concentration (specifically, 5% by volume in Patent Document 4, and 50% by volume in Patent Document 5); or a space velocity based on ammonia is low (specifically, 642 h$^{-1}$ in Patent Document 4, 1,000 h$^{-1}$ in Patent Document 5, and 430 h$^{-1}$ in Non-patent Document 1). Thus, even if the ammonia decomposition rate is 100% at relatively low temperatures, it does not mean that the catalyst performance is necessarily high.

As described above, all the conventional ammonia decomposition catalysts cannot efficiently decompose ammonia at relatively low temperatures and at high space velocities to obtain high-purity hydrogen.

Patent Document 1: Japanese Patent Laid-open Publication (Kokai) No. Sho 64-56301
Patent Document 2: Japanese Patent Laid-open Publication (Kokai) No. 2004-195454
Patent Document 3: Japanese Patent Laid-open Publication (Kokai) No. Hei 1-119341
Patent Document 4: Japanese Patent Laid-open Publication (Kokai) No. 2001-300314
Patent Document 5: Japanese Patent Laid-open Publication (Kokai) No. Hei 2-198639
US 2001/031236 A1 describes a method of decomposing ammonia gas.
GB 1 000 772 A describes the decomposition of ammonia.

Non-patent Document 1: Masahiro MASUDA and other three persons, "Ammonia decomposition characteristics of rare-earth oxide-iron type composites," the proceedings entitled "Rare Earths" of the 18th Rare Earth Symposium, Organizer: Rare Earth Society of Japan, Schedule: May 10 to 11, 2001, at Chuo University, p. 122-123 Prakash Biswas et al. describe a steam reforming (SR) and an oxidative steam reforming (OSR) of ethanol over an undoped and a Cu, Co and Ca doped Ni/CeO2-ZrO2 catalyst in the temperature range of 400-650°C (in Catalysis Letters, Vol. 118, Nos. 1-2, 2007, pp. 36-49).

Under the above circumstances, the problems to be solved by the present invention are to provide catalysts capable of efficiently decomposing ammonia, in a wide ammonia concentration range from low concentration to high concentration, into nitrogen and hydrogen at relatively low temperatures and at high space velocities to obtain high-purity hydrogen without using any noble metal, which has a practical problem in view of cost.

The present inventors have extensively studied, and as a result, have found that if a catalytically active component is allowed to contain a specific transition metal, there can be obtained a catalyst capable of effectively decomposing ammonia into nitrogen and hydrogen at relatively low temperatures and at high space velocities to obtain high-pure hydrogen, thereby completing the present invention.

Thus, the present invention provides the use of a catalyst comprising a catalytically active component containing at least one kind of iron group metal selected from the group consisting of iron, cobalt, and nickel; and at least one metal oxide selected from the group consisting of a solid solution of ceria and zirconia, a solid solution of ceria and yttria, and a solid solution of ceria and lanthanum oxide for decomposing ammonia into nitrogen and hydrogen.

In general, it has been found that if an oxide containing a specific transition metal (except for noble metals) is treated with ammonia gas or a nitrogen-hydrogen mixed gas at a specific temperature, there can be obtained a catalyst capable of effectively decomposing ammonia into nitrogen and hydrogen at relatively low temperatures and at high space velocities to obtain high-pure hydrogen.

There is described an ammonia decomposition catalyst (I) as a catalyst for decomposing ammonia into nitrogen and hydrogen, comprising a catalytically active component containing at least one kind (hereinafter referred to as "component A") selected from the group consisting of molybdenum, tungsten, and vanadium. In ammonia decomposition catalyst (I), the catalytically active component may preferably further comprise at least one kind (hereinafter referred to as "component B") selected from the group consisting of cobalt, nickel, manganese, and iron, in which case components A and B may more preferably be in the form of a composite oxide. In addition, the catalytically active component may further contain at least one kind (hereinafter referred to as "component C") selected from the group consisting of alkali metals, alkaline earth metals, and rare earth metals. Further, part or all of the catalytically active component may have been treated with ammonia gas or a nitrogen-hydrogen mixed gas.

There is further described a production process of ammonia decomposition catalyst (I), comprising preparing an oxide containing component A or an oxide containing components A and B, and then treating the oxide with ammonia gas or a nitrogen-hydrogen mixed gas at a temperature of from 300°C to 800°C. In this connection, a compound of component C may further be added after preparing the oxide. In ammonia decomposition catalyst (I) obtained by this production process, part or all of the catalytically active component has changed to a nitride containing component A or a nitride containing components A and B.

There is further described an ammonia treatment method comprising treating an ammonia-containing gas with the use of ammonia decomposition catalyst (I) as described above to thereby decompose the ammonia into nitrogen and hydrogen, and obtaining the hydrogen.

Moreover, in general, it has been found that if a catalytically active component is allowed to contain a nitride of a specific transition metal (except for noble metals), there can be obtained a catalyst capable of effectively decomposing ammonia into nitrogen and hydrogen at relatively low temperatures and at high space velocities to obtain high-pure hydrogen.

There is described an ammonia decomposition catalyst (II) as a catalyst for decomposing ammonia into nitrogen and hydrogen, comprising a catalytically active component containing a metal nitride. In ammonia decomposition catalyst (II), the catalytically active component may preferably contain a nitride of at least one kind of transition metal selected from the group consisting of molybdenum, tungsten, vanadium, chromium, manganese, iron, cobalt, and nickel, and may further contain at least one kind selected from the group consisting of alkali metals, alkaline earth metals, and rare earth metals.

There is further described a process for producing ammonia decomposition catalyst (II), comprising treating a precursor of the metal nitride with ammonia gas or a nitrogen-hydrogen mixed gas to form the metal nitride. In the production process of ammonia decomposition catalyst (II), the precursor may preferably be at least one kind of transition metal selected from the group consisting of molybdenum, tungsten, vanadium, chromium, manganese, iron, cobalt, and nickel; or a compound thereof. In addition, a compound of at least one kind selected from the group consisting of alkali metals, alkaline earth metals, and rare earth metals may be added to the precursor.

There is further described an ammonia treatment method comprising treating an ammonia-containing gas with the use of ammonia decomposition catalyst (II) as described above to thereby decompose the ammonia into nitrogen and hydrogen, and obtaining the hydrogen.

Furthermore, the present inventors have extensively studied, and as a result, have found that if an iron group metal is combined with a metal oxide, there can be obtained a catalyst capable of effectively decomposing ammonia into nitrogen and hydrogen at relatively low temperatures and at high space velocities to obtain high-pure hydrogen, thereby completing the present invention.

Thus, the present invention provides the use of ammonia decomposition catalyst (III) as a catalyst for decomposing ammonia into nitrogen and hydrogen, the catalyst comprising a catalytically active component containing at least one kind of iron group metal selected from the group consisting of iron, cobalt, and nickel; and at least one metal oxide selected from the group consisting of a solid solution of ceria and zirconia, a solid solution of ceria and yttria, and a solid solution of ceria and lanthanum oxide. In ammonia decomposition catalyst (III) used in the present invention, the catalytically active component may further contain an alkali metal and/or an alkaline earth metal.

In general, there is described a production process of ammonia decomposition catalyst (III), comprising allowing a compound of an iron group metal to be supported on a metal oxide; and subjecting the compound to reduction treatment to form the iron group metal. In the production process of ammonia decomposition catalyst (III), the reduction treatment may preferably be carried out with a reductive gas at a temperature of from 300°C to 800°C.

According to the present invention, there is provided the use of a catalyst capable of efficiently decomposing ammonia, in a wide ammonia concentration range from low concentration to high concentration, into nitrogen and hydrogen at relatively low temperatures and at high space velocities to obtain high-purity hydrogen without using a noble metal for decomposing ammonia into nitrogen and hydrogen to obtain hydrogen.

[FIG. 1] FIG. 1 is the X-ray diffraction pattern of a catalyst produced in Experimental Example II-8.
[FIG. 2] FIG. 2 is the X-ray diffraction pattern of a catalyst produced in Experimental Example II-12.
[FIG. 3] FIG. 3 is the X-ray diffraction pattern of a catalyst produced in Experimental Example II-16.

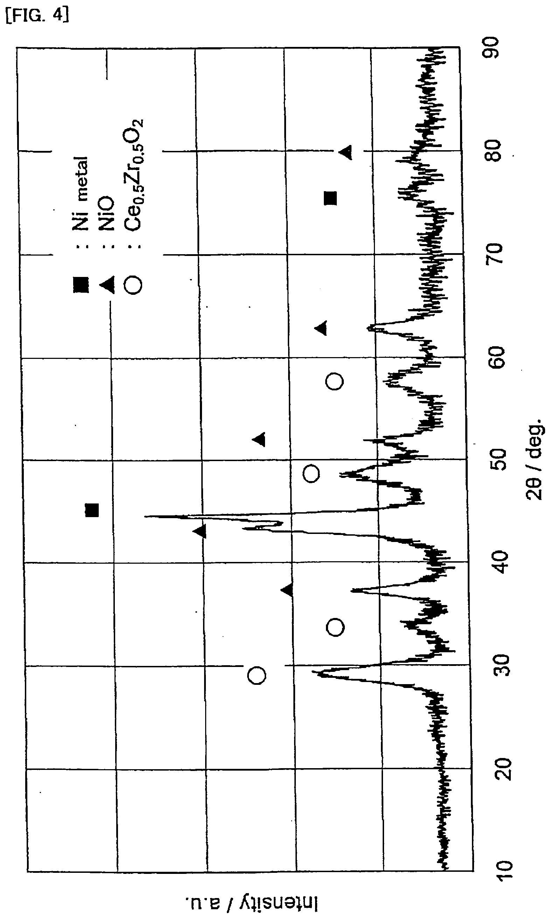

[FIG. 4] FIG. 4 is the X-ray diffraction pattern of catalyst 11 produced in Experimental Example III-11.

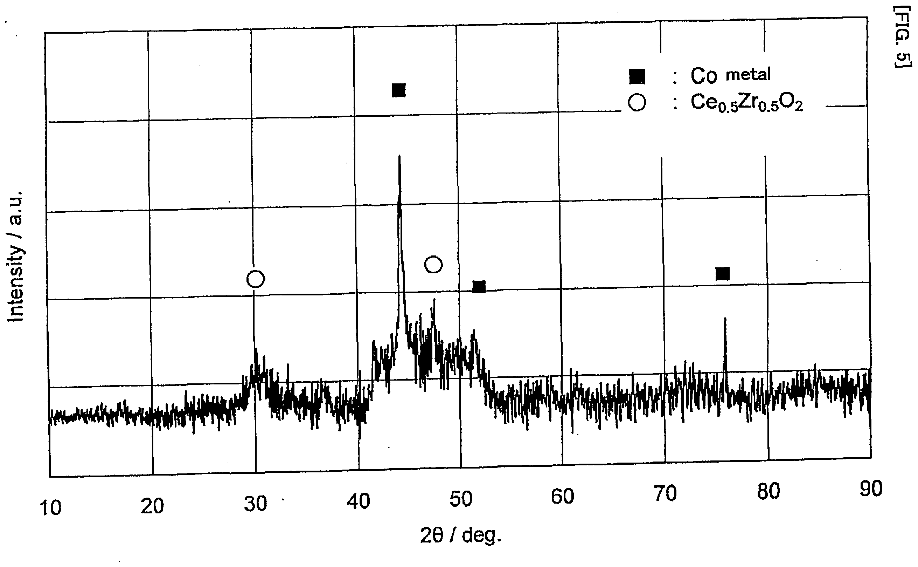

[FIG. 5] FIG. 5 is the X-ray diffraction pattern of catalyst 12 produced in Experimental Example III-12.

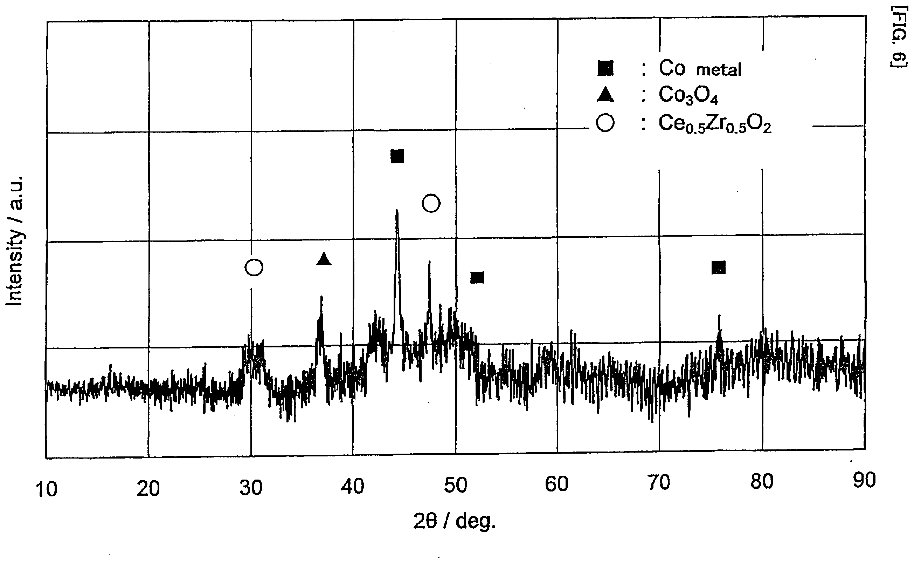

[FIG. 6] FIG. 6 is the X-ray diffraction pattern of catalyst 25 produced in Experimental Example III-25.

<<Ammonia Decomposition Catalyst (I)>>

The ammonia decomposition catalyst (I) (hereinafter referred to sometimes as the "catalyst (I)") is a catalyst for decomposing ammonia into nitrogen and hydrogen, and is characterized in that a catalytically active component contains at least one kind (hereinafter referred to as "component A") selected from the group consisting of molybdenum, tungsten, and vanadium.

The catalytically active component may preferably further contain at least one kind (hereinafter referred to as "component B") selected from the group consisting of cobalt, nickel, manganese, and iron, in addition to component A. In this case, components A and B may more preferably be in the form of a composite oxide.

Alternatively, the catalytically active component may further contain at least one selected from the group consisting of alkali metals, alkaline earth metals, and rare earth metals (hereinafter referred to as "component C"), in addition to component A, or in addition to components A and B.

In this connection, part or all of the catalytically active component may be treated with an ammonia gas or a nitrogen-hydrogen mixed gas.

<Component A>

The catalytically active component contains, as component A, at least one kind selected from the group consisting of molybdenum, tungsten, and vanadium. In these components A, molybdenum and tungsten may be preferred, and molybdenum may be more preferred.

The starting raw material of component A is not particularly limited, so long as it is usually used as a raw material of catalysts. Examples of the starting raw material of component A may preferably include inorganic compounds, such as oxides, chlorides, ammonium salts, and alkali metal salts; organic salts, such as acetates and oxalates; and organometallic complexes, such as acetylacetonato complexes and metal alkoxides.

Specific examples of the molybdenum source may include molybdenum oxide, ammonium molybdate, sodium molybdate, potassium molybdate, rubidium molybdate, cesium molybdate, lithium molybdate, molybdenum 2-ethylhexanoate, and bis(acetylacetonato)oxomolybdenum, and ammonium molybdate may be preferred. Specific examples of the tungsten source may include tungsten oxide, ammonium tungstate, sodium tungstate, potassium tungstate, rubidium tungstate, lithium tungstate, and tungsten ethoxide, and ammonium tungstate may be preferred. Specific examples of the vanadium source may include vanadium oxide, ammonium vanadate, sodium vanadate, lithium vanadate, bis(acetylacetonato)oxovanadium, vanadium oxytriethoxide, and vanadium oxytriisopropoxide, and ammonium vanadate may be preferred.

Component A is an essential element of the catalytically active component, and the content of component A may preferably be from 20% to 90% by mass, more preferably from 40% to 70% by mass, relative to 100% by mass of the catalytically active component.

<Component B>

The catalytically active component may preferably contain, as component B, at least one kind selected from the group consisting of cobalt, nickel, manganese, and iron. In these components B, cobalt and nickel may be preferred, and cobalt may be more preferred.

The starting raw material of component B is not particularly limited, so long as it is usually used as a raw material of catalysts. Examples of the starting raw material of component B may preferably include inorganic compounds, such as oxides, hydroxides, nitrates, sulfates, and carbonates; organic salts, such as acetates and oxalates; and organometallic complexes, such as acetylacetonato complexes and metal alkoxides.

Specific examples of the cobalt source may include cobalt oxide, cobalt hydroxide, cobalt nitrate, cobalt sulfate, cobalt ammonium sulfate, cobalt carbonate, cobalt acetate, cobalt oxalate, cobalt citrate, cobalt benzoate, cobalt 2-ethylhexanoate, and lithium cobalt oxide, and cobalt nitrate may be preferred. Specific examples of the nickel source may include nickel oxide, nickel hydroxide, nickel nitrate, nickel sulfate, nickel carbonate, nickel acetate, nickel oxalate, nickel citrate, nickel benzoate, nickel 2-ethylhexanoate, and bis(acetylacetonato)nickel, and nickel nitrate may be preferred. Specific examples of the manganese source may include manganese oxide, manganese nitrate, manganese sulfate, manganese carbonate, manganese acetate, manganese citrate, manganese 2-ethylhexanoate, potassium permanganate, sodium permanganate, and cesium permanganate, and manganese nitrate may be preferred. Specific examples of the iron source may include iron oxide, iron hydroxide, iron nitrate, iron sulfate, iron acetate, iron oxalate, iron citrate, and iron methoxide, and iron nitrate may be preferred.

The content of component B may preferably be from 0% to 50% by mass, more preferably from 10% to 40% by mass, relative to 100% by mass of the catalytically active component.

When components A and B are used in combination, the starting raw materials of components A and B may be, for example, a mixture of an oxide of component A and an oxide of component B, or may be a composite oxide of components A and B. Specific examples of the composite oxide of components A and B are not particularly limited, and may include, for example, $CoMoO_4$, $NiMoO_4$, $MnMoO_4$, and $CoWO_4$.

<Component C>

The catalytically active component may contain, as component C, at least one kind selected from the group consisting of alkali metals, alkaline earth metals, and rare earth metals. In these components C, alkali metals and alkaline earth metals may be preferred, and alkali metals may be more preferred.

The starting raw material of component C is not particularly limited, so long as it is usually used as a raw material of catalysts. Examples of the starting raw material of component C may preferably include oxides, hydroxides, nitrates, sulfates, carbonates, acetates, and oxalates.

The content of component C may preferably be from 0% to 50% by mass, more preferably from 0.2% to 20% by mass, relative to 100% by mass of the catalytically active component.

<<Process for Producing Ammonia Decomposition Catalyst (I)>>

The following will show preferred specific examples of a process for producing the ammonia decomposition catalyst (I).

(1) A method of using, as a catalyst, a baked product obtained by baking an oxide of component A, a mixture of an oxide of component A and an oxide of component B, a composite oxide of components A and B, a mixture obtained by adding an oxide of component C to each of these products, or a mixture obtained by adding an aqueous solution of component C to each of these products and drying the resulting product;

(2) A method of further treating the baked product of (1) with an ammonia gas or a nitrogen-hydrogen mixed gas at a temperature of from 300°C to 800°C (nitriding treatment);

(3) A method of using, as a catalyst, an oxide obtained by baking an aqueous solution of a salt containing component A;

(4) A method of further treating the oxide of (3) with an ammonia gas or a nitrogen-hydrogen mixed gas at a temperature of from 300°C to 800°C (nitriding treatment);

(5) A method of using, as a catalyst, an oxide obtained by baking an aqueous solution of a salt containing component A and a salt containing component B;

(6) A method of further treating the oxide of (5) with an ammonia gas or a nitrogen-hydrogen mixed gas at a temperature of from 300°C to 800°C (nitriding treatment);

(7) A method of using, as a catalyst, an oxide obtained by baking a gel obtained by neutralizing an acid aqueous solution of a salt containing component A with an aqueous solution of an alkali metal or ammonia water;

(8) A method of further treating the oxide of (7) with an ammonia gas or a nitrogen-hydrogen mixed gas at a temperature of from 300°C to 800°C (nitriding treatment);

(9) A method of using, as a catalyst, an oxide obtained by baking a gel obtained by neutralizing an acid aqueous solution of a salt containing component A and a salt containing component B with an aqueous solution of an alkali metal or ammonia water; and

(10) A method of further treating the oxide of (9) with an ammonia gas or a nitrogen-hydrogen mixed gas at a temperature of from 300°C to 800°C (nitriding treatment).

The process for producing the ammonia decomposition catalyst (I) (hereinafter referred to sometimes as the "production process (I)") is characterized by preparing an oxide containing component A or an oxide containing components A and B, and then treating the oxide with an ammonia gas or a nitrogen-hydrogen mixed gas at a temperature of from 300°C to 800°C (nitriding treatment). In this connection, after the oxide is prepared, a compound of component C may further be added to the oxide.

The temperature of the nitriding treatment may usually be from 300°C to 800°C, preferably from 400°C to 750°C, and more preferably from 500 to 720°C. When an ammonia gas is used, the concentration of the ammonia gas may preferably be from 10% to 100% by volume, more preferably from 50% to 100% by volume. When a nitrogen-hydrogen mixed gas is used, the concentration of the nitrogen may preferably be from 2% to 95% by volume, more preferably from 20% to 90% by volume. The concentration of the hydrogen may preferably be from 5% to 98% by volume, more preferably from 10% to 80% by volume.

In either case of the ammonia gas and the nitrogen-hydrogen mixed gas, the flow rate (volume) of the gas may preferably be from 80 to 250 times, more preferably from 100 to 200 times, the volume of the catalyst, per minute.

In this connection, it may be more preferred that prior to the nitriding treatment, the temperature is increased to from 300°C to 400°C while nitrogen is allowed to flow. In this case, the flow rate (volume) of the nitrogen may preferably be from 50 to 120 times, more preferably from 60 to 100 times, the volume of the catalyst, per minute.

The proportion of the catalytically active component changed to a nitride by the nitriding treatment can be confirmed by examining the crystal structure of the catalyst with X-ray diffraction. The entire catalytically active component has preferably changed to a nitride; however, this is not necessarily required. Even when a part of the catalytically active component has changed to a nitride, a sufficient catalyst activity is obtained. The proportion of the nitride in the catalyst (the proportion on the assumption that the sum of the integrated values of both the peaks of the oxide and the peaks of the nitride in the X-ray diffraction pattern is 100%) may preferably be 3% or higher, more preferably 5% or higher.

<<Ammonia Decomposition Catalyst (II)>>

The ammonia decomposition catalyst (II) (hereinafter referred to sometimes as the "catalyst (II)") is a catalyst for decomposing ammonia into nitrogen and hydrogen, and is characterized in that a catalytically active component contains a metal nitride.

In the catalyst (II), the metal nitride is not particularly limited, so long as it is a nitride of a transition metal. Examples of the metal nitride may include nitrides of transition metals belonging to Groups 4 to 8 in the periodic table. In these metal nitrides, a nitride may preferably be formed of at least one kind of transition metal selected from the group consisting of molybdenum, cobalt, nickel, iron, vanadium, tungsten, chromium, and manganese, and a nitride may more preferably be formed of at least one kind of transition metal selected from the group consisting of molybdenum, cobalt, nickel, and iron.

The metal nitride itself may be used, or may be formed by nitriding a precursor of the metal nitride with an ammonia gas or a nitrogen-hydrogen mixed gas. Examples of the precursor of the metal nitride may include transition metals, oxides thereof, and salts thereof. In these precursors, oxides of transition metals may be preferred. The transition metals are as described above.

The proportion of the catalytically active component changed to a nitride by the nitriding treatment can be confirmed by examining the crystal structure of the catalyst with X-ray diffraction. The entire catalytically active component has preferably changed to a nitride; however, this is not necessarily required. Even when a part of the catalytically active component has changed to a nitride, a sufficient catalyst activity is obtained. The proportion of the nitride in the catalyst (the proportion on the assumption that the sum of the integrated values of both the peaks of the oxide and the peaks of the nitride in the X-ray diffraction pattern is 100%) may preferably be 3% or higher, more preferably 5% or higher.

In the catalyst (II), the catalytically active component may further contain at least one kind selected from the group consisting of alkali metals, alkaline earth metals, and rare earth metals. In these additional components, alkali metals may be preferred.

The amount of each of the additional components (oxide equivalents) may preferably be from 0% to 50% by mass, more preferably from 0.2% to 20% by mass, relative to the metal nitride. In this connection, the oxide equivalents are calculated on the conditions that rare earth metals are in the form of oxides of trivalent metals, alkali metals are in the form of oxides of monovalent metals, and alkaline earth metals are in the form of oxides of bivalent metals.

<<Process for Producing Ammonia Decomposition Catalyst (II)>>

The following will show preferred specific examples of a process for producing the ammonia decomposition catalyst (II).

(1) A method of nitriding a precursor of a metal nitride with an ammonia gas;

(2) A method of nitriding a precursor of a metal nitride with a nitrogen-hydrogen mixed gas;

(3) A method of mixing an additional component with a precursor of a metal nitride such that the precursor of the metal nitride contains the additional component, and then nitriding the resulting product with an ammonia gas or a nitrogen-hydrogen mixed gas;

(4) A method of mixing an aqueous solution, or an aqueous suspension, containing an additional component with a precursor of a metal nitride, drying the resulting product, baking the resulting product, if necessary, and then nitriding the resulting product with an ammonia gas or a nitrogen-hydrogen mixed gas;

(5) A method of nitriding a precursor of a metal nitride with an ammonia gas or a nitrogen-hydrogen mixed gas, and then mixing an additional component with the resulting product such that the resulting product contains the additional component; and

(6) A method of nitriding a precursor of a metal nitride with an ammonia gas or a nitrogen-hydrogen mixed gas, mixing an aqueous solution, or an aqueous suspension, containing an additional component with the resulting product, drying the resulting product, and further baking the resulting product, if necessary.

The process for producing the ammonia decomposition catalyst (II) (hereinafter referred to sometimes as the "production process (II)") is characterized by, for example, nitriding a precursor of a metal nitride with an ammonia gas or a nitrogen-hydrogen mixed gas to form the metal nitride.

The precursor of the metal nitride may preferably be at least one kind of transition metal selected from the group consisting of molybdenum, cobalt, nickel, iron, vanadium, tungsten, chromium, and manganese, or a compound thereof. Alternatively, a compound of at least one kind selected from the group consisting of alkali metals, alkaline earth metals, and rare earth metals may further be added to the precursor of the metal nitride. In these additional components, alkali metals may be preferred.

The metal nitride itself is used, or is formed by nitriding a precursor of the metal nitride with an ammonia gas or a nitrogen-hydrogen mixed gas. Examples of the precursor of the metal nitride may include transition metals, oxides thereof, and salts thereof. In these precursors, oxides of transition metals may be preferred. The transition metals are as described above.

The temperature of the nitriding treatment may usually be from 300°C to 800°C, preferably from 400°C to 750°C, and more preferably from 500°C to 720°C. When ammonia is used, the concentration of the ammonia may preferably be from 10% to 100% by volume, more preferably from 50% to 100% by volume. When a nitrogen-hydrogen mixed gas is used, the concentration of the nitrogen may preferably be from 2% to 95% by volume, more preferably from 20% to 90% by volume. The concentration of the hydrogen may preferably be from 5% to 98% by volume, more preferably from 10% to 80% by volume.

In either case of the ammonia and the nitrogen-hydrogen mixed gas, the flow rate (volume) of the gas may preferably be from 80 to 250 times, more preferably from 100 to 200 times, the volume of the catalyst, per minute.

In this connection, it may be more preferred that prior to the nitriding treatment, the temperature is increased to from 300°C to 400°C while nitrogen is allowed to flow. In this case, the flow rate (volume) of the nitrogen may preferably be from 50 to 120 times, more preferably from 60 to 100 times, the volume of the catalyst, per minute.

<<Ammonia Decomposition Catalyst (III)>>

The ammonia decomposition catalyst (III) used in the present invention is characterized in that a catalytically active component contains an iron group metal and a metal oxide.

The iron group metal is at least one kind selected from the group consisting of cobalt, nickel, and iron. In these iron group metals, cobalt and nickel may be preferred, and cobalt may be more preferred.

The starting raw material of the iron group metal is not particularly limited, so long as it is usually used as a raw material of catalysts. Examples of the starting raw material of the iron group metal may preferably include inorganic compounds, such as oxides, hydroxides, nitrates, sulfates, and carbonates; organic salts, such as acetates and oxalates; and organometallic complexes, such as acetylacetonato complexes and metal alkoxides.

Specific examples of the cobalt source may include cobalt oxide, cobalt hydroxide, cobalt nitrate, cobalt sulfate, cobalt ammonium sulfate, cobalt carbonate, cobalt acetate, cobalt oxalate, cobalt citrate, cobalt benzoate, cobalt 2-ethylhexanoate, and lithium cobalt oxide, and cobalt nitrate may be preferred. Specific examples of the nickel source may include nickel oxide, nickel hydroxide, nickel nitrate, nickel sulfate, nickel carbonate, nickel acetate, nickel oxalate, nickel citrate, nickel benzoate, nickel 2-ethylhexanoate, and bis(acetylacetonato)nickel, and nickel nitrate may be preferred. Specific examples of the iron source may include iron oxide, iron hydroxide, iron nitrate, iron sulfate, iron carbonate, iron acetate, iron oxalate, iron citrate, and iron methoxide, and iron nitrate may be preferred.

The iron group metal is an essential component of the catalytically active component, and the content of the iron group metal may preferably be from 5% to 90% by mass, more preferably from 10% to 80% by mass, relative to 100% by mass of the catalytically active component.

In this connection, at least one other transition metal (except for noble metals) and/or at least one other typical metal may be added to the iron group metal. Examples of the other transition metal may include molybdenum, tungsten, vanadium, chromium, and manganese. Examples of the other typical metal may include zinc, gallium, indium, and tin.

The starting raw materials of the other transition metal and the other typical metal are not particularly limited, so long as they are each usually used as a raw material of catalysts. Examples of the starting raw materials of the other transition metal and the other typical metal may include oxides, hydroxides, nitrates, sulfates, carbonates, acetates, oxalates, and organometallic complexes.

The metal oxide is at least one metal oxide selected from the group consisting of a solid solution of ceria and zirconia ($CeZrO_x$), a solid solution of ceria and yttria ($CeYO_x$), and a solid solution of ceria and lanthanum oxide ($CeLaO_x$), and a solid solution of ceria and zirconia ($CeZrO_x$) is preferred.

The metal oxide is an essential component of the catalytically active component, and the content of the metal oxide may preferably be from 10% to 95% by mass, more preferably from 20% to 90% by mass, relative to 100% by mass of the catalytically active component.

The catalytically active component may further contain an alkali metal and/or an alkaline earth metal (hereinafter referred to sometimes as the "additional component") in addition to the iron group metal and the metal oxide.

Examples of the alkali metal may include lithium, sodium, potassium, and cesium. In these alkali metals, potassium and cesium may be preferred.

Examples of the alkaline earth metal may include magnesium, calcium, strontium, and barium. In these alkaline earth metals, strontium and barium may be preferred.

The starting raw material of the additional component is not particularly limited, so long as it is usually used as a raw material of catalysts. Examples of the starting raw material of the additional component may preferably include hydroxides, nitrates, carbonates, acetates, and oxalates. It may be preferred that an aqueous solution is prepared in which a compound of each of these examples is dissolved, a catalyst is impregnated with the aqueous solution, whereby the starting raw material of the additional component is added to the catalyst, and then, the decomposition treatment of the compound, which is the starting raw material of the additional component, is carried out. Examples of the decomposition treatment may include a method of carrying out decomposition by increasing the temperature in a stream of nitrogen, and a method of carrying out decomposition by increasing the temperature in a stream of hydrogen. In these decomposition treatments, a method of carrying out decomposition by increasing the temperature in a stream of hydrogen may be preferred.

The content of the additional component may preferably be from 0% to 25% by mass, more preferably from 0.2% to 15% by mass, and still more preferably from 0.4% to lower than 10% by mass, relative to 100% by mass of the catalytically active component.

From the viewpoint of the heat resistance of a catalyst, it is generally known that it is effective to suppress the agglomeration of catalyst particles or to increase the surface area of the catalyst. Thus, for example, to suppress the agglomeration of catalyst particles, an additive may possibly be added to the metal oxide. In this case, it is effective to select, from metal oxides and additives, a combination of a metal oxide and an additive, both of which do not form a solid solution together. For example, when the metal oxide is a solid solution of ceria and zirconia ($CeZrO_x$), particles of alkaline earth metals such as magnesium and calcium, particles of metal oxides such as silica and alumina, carbon black, or the like are added as an additive that does not form a solid solution. This suppresses the agglomeration of catalyst particles when the catalyst is used, and therefore improves the heat resistance of the catalyst.

<<Process for Producing Ammonia Decomposition Catalyst (III)>>

The following will show preferred specific examples of a process for producing the ammonia decomposition catalyst (III) used in the present invention.

(1) A method of impregnating a metal oxide with an aqueous solution of a compound of an iron group metal, drying the resulting product, pre-baking the resulting product with an inert gas, and then reducing the resulting product with a reducing gas;
(2) A method of impregnating a metal oxide with an aqueous solution of a compound of an iron group metal, drying the resulting product, reducing the resulting product using an aqueous reducing agent, and then filtering and drying the resulting product;

(3) A method of adding an aqueous solution containing an additional component to a metal oxide, drying the resulting product, impregnating the resulting product with an aqueous solution of a compound of an iron group metal, drying the resulting product, pre-baking the resulting product with an inert gas, and then reducing the resulting product with a reducing gas;

(4) A method of impregnating a metal oxide with an aqueous solution of a compound of an iron group metal, drying the resulting product, further impregnating the metal oxide with an aqueous solution of a compound of an iron group metal, drying the resulting product, pre-baking the resulting product with an inert gas, and then reducing the resulting product with a reducing gas;

(5) A method of impregnating a metal oxide with an aqueous solution of a compound of an iron group metal, drying the resulting product, pre-baking the resulting product with an inert gas, reducing the resulting product with a reducing gas, adding an aqueous solution containing an additional component to the resulting product, drying the resulting product, and then reducing the resulting product with a reducing gas again;

(6) A method of dripping an aqueous solution containing a compound of an iron group metal and an aqueous metal salt, which is a precursor of a metal oxide, into an excess of an alkaline aqueous solution (e.g., ammonia water, an aqueous tetramethyl ammonium hydroxide solution, an aqueous potassium hydroxide solution) while carrying out agitation, filtering the obtained solid product, washing with water and drying the resulting product, and then reducing the resulting product; and

(7) A method of dripping an excess of an alkaline aqueous solution (e.g., ammonia water, an aqueous tetramethyl ammonium hydroxide solution, and an aqueous potassium hydroxide solution) into an aqueous solution containing a compound of an iron group metal and an aqueous metal salt, which is a precursor of a metal oxide, while carrying out agitation, filtering the obtained solid product, washing with water and drying the resulting product, and then reducing the resulting product.

The process for producing the ammonia decomposition catalyst (III) used in the present invention is characterized by reducing a compound of an iron group metal to form the iron group metal.

The reduction treatment is not particularly limited, so long as it is possible to reduce a compound of an iron group metal to form the iron group metal. Specific examples of the reduction treatment may include a method of using a reducing gas, such as carbon monoxide, a hydrocarbon, and hydrogen, and a method of adding a reducing agent, such as hydrazine, lithium aluminum hydride, and tetramethyl borohydride. In this connection, when a reducing gas is used, the reducing gas may be diluted with another gas (e.g., nitrogen, carbon dioxide). In these methods, reduction treatment using hydrogen as a reducing gas may be preferred.

When a reducing gas is used, heating is carried out at a temperature of preferably from 300°C to 800°C, more preferably from 400°C to 600°C. The reduction time may preferably be from 0.5 to 5 hours, more preferably from 1 to 3 hours. Alternatively, prior to the reduction treatment using a reducing gas, it is also possible to make pre-baking using an inert gas, such as nitrogen or carbon dioxide, at a temperature of preferably from 200°C to 400°C for preferably from 1 to 7 hours, more preferably from 3 to 6 hours.

After being reduced, a compound of an iron group metal is, in principle, converted into an iron group metal having a zero-valent metal state. When the reduction treatment is insufficient, the compound of the iron group metal is only partially reduced, and the catalyst shows only a low activity. Even in such a case, however, hydrogen is produced during ammonia decomposition reaction, and therefore, this results in the same environment as the state where a reduction treatment is carried out. Thus, the continuation of such a reaction promotes the reduction treatment on the insufficiently reduced part such that a zero-valent metal state is obtained, and therefore, the catalyst shows a high activity.

<<Physical Properties and Shapes of Ammonia Decomposition Catalysts>>

<Physical Properties>

The catalysts (I), (II), and (III) each have a specific surface area of preferably from 1 to 300 $m^2/g$, more preferably from 5 to 260 $m^2/g$, and still more preferably from 18 to 200 $m^2/g$. In this connection, the "specific surface area" means, for example, a BET specific surface area measured using an automatic BET specific surface area analyzer (product name "Marcsorb HM Model-1201" available from Mountech Co., Ltd.).

In the catalyst (III) used in the present invention, the iron group metal has a crystallite size of preferably from 3 to 200 nm, more preferably from 5 to 150 nm, and still more preferably from 10 to 100 nm. The metal oxide has a crystallite size of preferably from 2 to 200 nm, more preferably from 3 to 100 nm, and still more preferably from 4 to 25 nm. The crystallite sizes were measured by attributing crystal structures in the result of X-ray diffraction measurements, and carrying out calculations using the following Scherrer's formula, from the half widths of the peaks, which indicate maximum intensities.

[Formula 1]

$$\text{Crystallite size (nm)} = K\lambda/\beta\cos\theta$$

where K is a shape factor (0.9 is substituted on the assumption of a spherical shape), $\lambda$ is a measured X-ray wavelength (CuK$\alpha$: 0.154 nm), $\beta$ is a half width (rad), and $\theta$ is a Bragg angle (half the angle of diffraction 2$\theta$: deg).

<Shapes of Catalysts>

The catalysts (I), (II), and (III) may each be obtained by using the catalytically active component as the catalyst as it is, or supporting the catalytically active component on a carrier, using a conventionally known method. The carrier is not particularly limited, and examples of the carrier may include metal oxides, such as alumina, silica, titania, zirconia, and ceria.

The catalysts (I), (II), and (III) may each be formed into a desired shape when used, using a conventionally known method. The shape of the catalyst is not particularly limited, and examples of the shape of the catalyst may include granular, spherical, pellet-shaped, fractured, saddle-shaped, ring-shaped, honeycomb-shaped, monolith-shaped, net-shaped, solid-cylindrical, and hollow-cylindrical.

Further, the catalysts (I), (II), and (III) may each be coated on the surface of a structure in a layered manner. The structure is not particularly limited, and examples of the structure may include structures formed of ceramics, such as cordierite, mullite, silicon carbide, alumina, silica, titania, zirconia, and ceria, and structures formed of metals, such as ferrite stainless steel. The shape of the structure is not particularly limited, and examples of the shape of the structure may include honeycomb-shaped, corrugated, net-shaped, solid-cylindrical, and hollow-cylindrical.

<<Ammonia Treatment Method>>

The ammonia treatment method is characterized by treating a gas containing ammonia, using the ammonia decomposition catalyst (I) or (II) (not according to the present invention), or (III) (according to the present invention) as described above, so as to decompose the ammonia into nitrogen and hydrogen to obtain hydrogen. The "gas containing ammonia," which is the object of the treatment, is not particularly limited, and may be not only an ammonia gas and an ammonia-containing gas, but also a gas containing a substance that produces ammonia by pyrolysis, such as urea. Alternatively, the gas containing ammonia may contain another component, so long as the component is not a catalyst poison.

The flow rate of the "gas containing ammonia" per catalyst is a space velocity of preferably from 1,000 to 200,000 h$^{-1}$, more preferably from 2,000 to 150,000 h$^{-1}$, and even more preferably from 3,000 to 100,000 h$^{-1}$. In this connection, the flow rate of the "gas containing ammonia" per catalyst means, when a reactor is filled with the catalyst, the volume of the "gas containing ammonia" that passes through the catalyst per unit of time, per volume occupied by the catalyst.

The reaction temperature may preferably be from 180°C to 950°C, more preferably from 300°C to 900°C, and still more preferably from 400°C to 800°C. The reaction pressure may preferably be from 0.002 to 2 MPa, more preferably from 0.004 to 1 MPa.

According to the ammonia treatment method, it is possible to obtain high-purity hydrogen by decomposing ammonia into nitrogen and hydrogen, and separating the nitrogen and the hydrogen from each other, using a conventionally known method.

Examples

The present invention will be explained below more specifically by reference to Experimental Examples, but the present invention is not limited to these Experimental Examples. The present invention can be put into practice after appropriate modifications or variations within a range meeting both of the gist described above and below, all of which are included in the technical scope of the present invention.

- Ammonia Decomposition Catalyst (I) - (Reference Examples)

First, the following will explain production examples and performance evaluations of the ammonia decomposition catalyst (I). In this connection, for X-ray diffraction measurements, an X-ray diffractometer (product name "RINT-2400" available from Rigaku Corporation) was used. The X-ray diffraction measurements were made, using CuK$\alpha$ (0.154 nm) for an X-ray source, under the measurement conditions: the X-ray output was 50 kV and 300 mA; the divergence slit was 1.0 mm; the divergence vertical limit slit was 10 mm; the scanning speed was 5 degrees per minute; the sampling width was 0.02 degrees; and the scanning range was from 5 to 90 degrees.

<<Experimental Example I-I>> (Reference Example)

First, 80.00 g of cobalt nitrate hexahydrate was dissolved in 400.00 g of distilled water. Separately, 48.53 g of ammonium molybdate was gradually added to and dissolved in 250 g of boiled distilled water. After both aqueous solutions were mixed together, the mixture was heated and agitated, and was evaporated to dryness. The obtained solid product was dried at 120°C for 10 hours, was then baked at 350°C in a stream of nitrogen for 5 hours, and was baked at 500°C in a stream of air for 3 hours. It was confirmed by the X-ray diffraction measurements that $\alpha$-CoMoO$_4$ was obtained.

Further, a reaction tube made of SUS316 was filled with from 0.5 to 1.0 mL of $\alpha$-CoMoO$_4$, and the temperature was increased to 400°C while from 30 to 50 mL/min of a nitrogen gas (hereinafter abbreviated as "nitrogen") was allowed to flow. Then, an ammonia decomposition catalyst (hereinafter referred to as "CoMoO$_4$") was obtained by carrying out the treatment of increasing the temperature to 700°C while from 50 to 100 mL/min of an ammonia gas (hereinafter abbreviated as "ammonia") was allowed to flow, and holding the resulting product at 700°C for 5 hours (nitriding treatment).

<<Experimental Example I-2>> (Reference Example)

First, 80.00 g of cobalt nitrate hexahydrate was dissolved in 400.00 g of distilled water. Separately, 48.53 g of ammonium molybdate was gradually added to and dissolved in 250 g of boiled distilled water. After both aqueous solutions were mixed together, the mixture was heated and agitated, and was evaporated to dryness. The obtained solid product was dried at 120°C for 10 hours, was then baked at 350°C in a stream of nitrogen for 5 hours, and was baked at 500°C in a stream of air for 3 hours. It was confirmed by the X-ray diffraction measurements that $\alpha$-CoMoO$_4$ was obtained.

Then, 0.089 g of cesium nitrate was dissolved in 3.23 g of distilled water. The resulting aqueous solution was uniformly penetrated into 6.00 g of $\alpha$-CoMoO4 in a dripping manner, and the resulting product was dried at 90°C for 10 hours. Then, it was confirmed by the X-ray diffraction measurements that $\alpha$-CoMoO$_4$ was obtained.

Further, a reaction tube made of SUS316 was filled with from 0.5 to 1.0 mL of $\alpha$-CoMoO$_4$ containing Cs, and the temperature was increased to 400°C while from 30 to 50 mL/min of nitrogen was allowed to flow. Then, an ammonia decomposition catalyst (hereinafter referred to as "1% Cs-CoMoO$_4$") was obtained by carrying out the treatment of increasing the temperature to 700°C while from 50 to 100 mL/min of ammonia was allowed to flow, and holding the resulting product at 700°C for 5 hours (nitriding treatment).

<<Experimental Example I-3>> (Reference Example)

In the same manner as described in Experimental Example I-2, except that instead of using an aqueous solution obtained by dissolving 0.089 g of cesium nitrate in 3.23 g of distilled water in Experimental Example 1-2, an aqueous solution obtained by dissolving 0.18 g of cesium nitrate in 3.21 g of distilled water was used, an ammonia decomposition catalyst (hereinafter referred to as "2% Cs-CoMoO$_4$") was obtained. In this connection, it was confirmed by the X-ray diffraction measurements that the state of the product obtained after the cesium nitrate was uniformly penetrated and the resulting product was dried at 90°C for 10 hours was $\alpha$-CoMoO$_4$.

<<Experimental Example I-4>> (Reference Example)

In the same manner as described in Experimental Example I-2, except that instead of using an aqueous solution obtained by dissolving 0.089 g of cesium nitrate in 3.23 g of distilled water in Experimental Example I-2, an aqueous solution obtained by dissolving 0.46 g of cesium nitrate in 3.20 g of distilled water was used, an ammonia decomposition catalyst (hereinafter referred to as "5% Cs-CoMoO$_4$") was obtained. In this connection, it was confirmed by the X-ray diffraction measurements that the state of the product obtained after the cesium nitrate was uniformly penetrated and the resulting product was dried at 90°C for 10 hours was $\alpha$-CoMoO$_4$.

<<Experimental Examples I-5 to I-7>> (Reference Examples)

In the same manner as described in Experimental Example I-1, except that the amounts of cobalt nitrate hexahydrate and ammonium molybdate in Experimental Example I-1 were appropriately changed, an ammonia decomposition catalyst having a molar ratio of cobalt to molybdenum (Co/Mo) of 1.05 (hereinafter referred to as "Co/Mo = 1.05") was obtained in Experimental Example I-5; an ammonia decomposition catalyst having a molar ratio (Co/Mo) of 1.10 (hereinafter referred to as "Co/Mo = 1.10") was obtained in Experimental Example I-6; and an ammonia decomposition catalyst having a molar ratio (Co/Mo) of 0.90 (hereinafter referred to as "Co/Mo = 0.90") was obtained in Experimental Example I-7. In this connection, it was confirmed by the X-ray diffraction measurements that the states of the products obtained after being baked at 350°C in a stream of nitrogen for 5 hours and baked at 500°C in a stream of air for 3 hours were each $\alpha$-CoMoO$_4$.

<<Experimental Example I-8>> (Reference Example)

In the same manner as described in Experimental Example I-1, except that instead of using cobalt nitrate hexahydrate in Experimental Example I-1, nickel nitrate hexahydrate was used, an ammonia decomposition catalyst (hereinafter referred to as "NiMoO$_4$") was obtained. In this connection, it was confirmed by the X-ray diffraction measurements that the state of the product obtained after being baked at 350°C in a stream of nitrogen for 5 hours and baked at 500°C in a stream of air for 3 hours was NiMoO$_4$ of the $\alpha$-CoMoO$_4$ type.

<<Experimental Example I-9>> (Reference Example)

In the same manner as described in Experimental Example I-8, except that after it was confirmed by the X-ray diffraction measurements that the state of the product obtained after being baked at 350°C in a stream of nitrogen for 5 hours and baked at 500°C in a stream of air for 3 hours was NiMoO$_4$ of the $\alpha$-CoMoO$_4$ type in Experimental Example I-8, an aqueous solution obtained by dissolving 0.075 g of cesium nitrate in 1.55 g of distilled water was uniformly penetrated into the NiMoO$_4$ of the $\alpha$-CoMoO4 type in a dripping manner, the resulting product was dried at 90°C for 10 hours, and the resulting product was then subjected to nitriding treatment, an ammonia decomposition catalyst (hereinafter referred to as "1% Cs-NiMoO$_4$") was obtained. In this connection, it was confirmed by the X-ray diffraction measurements that the state of the product obtained before being subjected to nitriding treatment was NiMoO$_4$ of the $\alpha$-CoMoO4 type.

<<Experimental Examples I-10 and I-11>> (Reference Examples)

In the same manner as described in Experimental Example I-9, except that instead of using an aqueous solution obtained by dissolving 0.075 g of cesium nitrate in 1.55 g of distilled water in Experimental Example I-9, an aqueous solution obtained by dissolving 0.15 g of cesium nitrate in 1.55 g of distilled water was used in Experimental Example I-10, and an aqueous solution obtained by dissolving 0.40 g of cesium nitrate in 1.55 g of distilled water was used in Experimental Example I-11, an ammonia decomposition catalyst (hereinafter referred to as "2% Cs-NiMoO4") and an ammonia decomposition catalyst (hereinafter referred to as "5% Cs-NiMoO4") were obtained, respectively.

In this connection, it was confirmed by the X-ray diffraction measurements that the states of the products obtained before being subjected to nitriding treatment were each NiMoO$_4$ of the $\alpha$-CoMoO4 type.

<<Experimental Example I-12>> (Reference Example)

A reaction tube made of SUS316 was filled with from 0.5 to 1.0 mL of molybdenum oxide (MoO$_3$), which was commercially available, and the temperature was increased to 400°C while from 30 to 50 mL/min of nitrogen was allowed to flow. Then, an ammonia decomposition catalyst (hereinafter referred to as "MoO$_3$") was obtained by carrying out the treatment of increasing the temperature to 700°C while from 50 to 100 mL/min of ammonia was allowed to flow, and holding the resulting product at 700°C for 5 hours (nitriding treatment).

<<Experimental Example I-13>> (Reference Example)

An aqueous solution obtained by dissolving 0.21 g of cesium nitrate in 1.62 g of distilled water was uniformly penetrated in a dripping manner into 7.00 g of molybdenum oxide (MoO$_3$), which was commercially available, and the resulting product was dried at 120°C for 10 hours, was then baked at 350°C in a stream of nitrogen for 5 hours, and was baked at 500°C in a stream of air for 3 hours.

Further, a reaction tube made of SUS316 was filled with from 0.5 to 1.0 mL of the baked product, and the temperature was increased to 400°C while from 30 to 50 mL/min of nitrogen was allowed to flow. Then, an ammonia decomposition catalyst (hereinafter referred to as "2% Cs-MoO$_3$") was obtained by carrying out the treatment of increasing the temperature to 700°C while from 50 to 100 mL/min of ammonia was allowed to flow, and holding the resulting product at 700°C for 5 hours (nitriding treatment).

<<Experimental Examples I-14 and I-15>> (Reference Examples)

In the same manner as described in Experimental Example I-13, except that instead of using an aqueous solution obtained by dissolving 0.21 g of cesium nitrate in 1.62 g of distilled water in Experimental Example I-13, an aqueous solution obtained by dissolving 0.54 g of cesium nitrate in 1.62 g of distilled water was used in Experimental example I-14, and an aqueous solution obtained by dissolving 1.14 g of cesium nitrate in 1.62 g of distilled water was used in Experimental Example I-15, an ammonia decomposition catalyst (hereinafter referred to as "5% Cs-MoO3") and an ammonia decomposition catalyst (hereinafter referred to as "10% Cs-MoO3") were obtained, respectively.

<<Experimental Example I-16>> (Reference Example)

First, 9.49 g of cobalt nitrate hexahydrate was dissolved in 41.18 g of distilled water, and 15.13 g of an ammonium metatungstate aqueous solution (abbreviated name "MW-2" available from Nippon Inorganic Colour & Chemical Co., Ltd.; containing 50% by mass of tungsten oxide) was added to the resulting product. After both solutions were mixed together, the mixture was heated and agitated, and was evaporated to dryness. The obtained solid product was dried at 120°C for 10 hours, was then baked at 350°C in a stream of nitrogen for 5 hours, and was baked at 500°C in a stream of air for 3 hours.
Further, a reaction tube made of SUS316 was filled with from 0.5 to 1.0 mL of the baked product, and the temperature was increased to 400°C while from 30 to 50 mL/min of nitrogen was allowed to flow. Then, an ammonia decomposition catalyst (hereinafter referred to as "$CoWO_4$") was obtained by carrying out the treatment of increasing the temperature to 700°C while from 50 to 100 mL/min of ammonia was allowed to flow, and holding the resulting product at 700°C for 5 hours (nitriding treatment).

<<Experimental Example I-17>> (Reference Example)

First, 13.36 g of manganese nitrate hexahydrate was dissolved in 67.08 g of distilled water. Separately, 8.22 g of ammonium molybdate was gradually added to and dissolved in 41.04 g of boiled distilled water. After both aqueous solutions were mixed together, the mixture was heated and agitated, and was evaporated to dryness. The obtained solid product was dried at 120°C for 10 hours, was then baked at 350°C in a stream of nitrogen for 5 hours, and was baked at 500°C in a stream of air for 3 hours. It was confirmed by the X-ray diffraction measurements that $\alpha$-$MnMoO_4$ was obtained.
Further, a reaction tube made of SUS316 was filled with from 0.5 to 1.0 mL of the baked product, and the temperature was increased to 400°C while from 30 to 50 mL/min of nitrogen was allowed to flow. Then, an ammonia decomposition catalyst (hereinafter referred to as "$MnMoO_4$") was obtained by carrying out the treatment of increasing the temperature to 700°C while from 50 to 100 mL/min of ammonia was allowed to flow, and holding the resulting product at 700°C for 5 hours (nitriding treatment).

<<Experimental Example I-18>> (Reference Example)

First, 11.81 g of calcium nitrate tetrahydrate was dissolved in 60.10 g of distilled water. Separately, 8.83 g of ammonium molybdate was gradually added to and dissolved in 45.06 g of boiled distilled water. After both aqueous solutions were mixed together, the mixture was heated and agitated, and was evaporated to dryness. The obtained solid product was dried at 120°C for 10 hours, was then baked at 350°C in a stream of nitrogen for 5 hours, and was baked at 500°C in a stream of air for 3 hours.
Further, a reaction tube made of SUS316 was filled with from 0.5 to 1.0 mL of the baked product, and the temperature was increased to 400°C while from 30 to 50 mL/min of nitrogen was allowed to flow. Then, an ammonia decomposition catalyst (hereinafter referred to as "$CaMoO_4$") was obtained by carrying out the treatment of increasing the temperature to 700°C while from 50 to 100 mL/min of ammonia was allowed to flow, and holding the resulting product at 700°C for 5 hours (nitriding treatment).

<<Experimental Example I-19>> (Reference Example)

First, 13.92 g of magnesium nitrate hexahydrate was dissolved in 70.02 g of distilled water. Separately, 9.58 g of ammonium molybdate was gradually added to and dissolved in 48.03 g of boiled distilled water. After both aqueous solutions were mixed together, the mixture was heated and agitated, and was evaporated to dryness. The obtained solid product was dried at 120°C for 10 hours, was then baked at 350°C in a stream of nitrogen for 5 hours, and was baked at 500°C in a stream of air for 3 hours.
Further, a reaction tube made of SUS316 was filled with from 0.5 to 1.0 mL of the baked product, and the temperature was increased to 400°C while from 30 to 50 mL/min of nitrogen was allowed to flow. Then, an ammonia decomposition catalyst (hereinafter referred to as "MgMoO$_4$") was obtained by carrying out the treatment of increasing the temperature to 700°C while from 50 to 100 mL/min of ammonia was allowed to flow, and holding the resulting product at 700°C for 5 hours (nitriding treatment).

<<Ammonia Decomposition Reaction>>

Using each of the catalysts obtained in Experimental Examples I-1 to I-19 and ammonia having a purity of 99.9% or higher by volume, ammonia decomposition reaction was carried out to decompose the ammonia into nitrogen and hydrogen.

In this connection, the rates of ammonia decomposition were measured (calculated by the formula below) under the conditions: the space velocity of ammonia was 6,000 h$^{-1}$; the reaction temperature was 400°C, 450°C, or 500°C; and the reaction pressure was 0.101325 MPa (normal pressure). The results are shown in Table 1.

[Formula 2]

$$\text{Ammonia decomposition rate (\%)} = [(\text{ammonia concentration at reactor inlet}) -$$

$$(\text{ammonia concentration at reactor outlet})] \times 100 \: / \: (\text{ammonia concentration at reactor}$$

$$\text{inlet})$$

[Table 1]

| | Catalyst name | Ammonia decomposition rates | | |
|---|---|---|---|---|
| | | 500°C | 450°C | 400°C |
| Experimental Example I-1* | CoMoO$_4$ | 79.4% | 34.9% | 12.3% |
| Experimental Example I-2* | 1% Cs-CoMoO$_4$ | 100.0% | 72.3% | 25.4% |
| Experimental Example I-3* | 2% Cs-CoMoO$_4$ | 100.0% | 56.8% | 18.1% |
| Experimental Example I-4* | 5% Cs-CoMoO$_4$ | 100.0% | 55.4% | 18.9% |
| Experimental Example I-5* | Co/Mo = 1.05 | 84.0% | 40.1% | 19.6% |
| Experimental Example I-6* | Co/Mo = 1.10 | 79.9% | 31.8% | 8.5% |
| Experimental Example I-7* | Co/Mo = 0.90 | 77.6% | 30.7% | 9.9% |
| Experimental Example I-8* | NiMoO$_4$ | 69.2% | 23.8% | 7.1% |
| Experimental Example I-9* | 1% Cs-NiMoO$_4$ | 61.3% | 16.7% | 4.4% |
| Experimental Example I-10* | 2% Cs-NiMoO$_4$ | 59.8% | 19.3% | 5.5% |
| Experimental Example I-11* | 5% Cs-NiMoO$_4$ | 42.8% | 10.0% | 3.9% |
| Experimental Example I-12* | MoO$_3$ | 44.3% | 12.1% | - |
| Experimental Example I-13* | 2% Cs-MoO$_3$ | 17.8% | 3.6% | - |
| Experimental Example I-14* | 5% Cs-MoO$_3$ | 15.8% | 3.7% | - |
| Experimental Example I-15* | 10% Cs-MoO$_3$ | 12.5% | 3.6% | - |
| Experimental Example I-16* | CoWO$_4$ | 12.1% | - | - |
| Experimental Example I-17* | MnMoO$_4$ | 16.3% | 4.6% | - |
| Experimental Example I-18* | CaMoO$_4$ | 8.6% | - | - |
| Experimental Example I-19* | MgMoO$_4$ | 35.0% | 9.3% | - |
| * Reference Example | | | | |

As can be seen from Table 1, all the ammonia decomposition catalysts of Experimental Examples I-1 to I-19 can efficiently decompose high-concentration ammonia, which has a purity of 99.9% or higher by volume, into nitrogen and hydrogen at relatively low temperatures, i.e., from 400°C to 500°C, and at a high space velocity, i.e., 6,000 h$^{-1}$. Further, each of the ammonia decomposition catalysts of Experimental Examples I-1 to I-11 is a composite oxide of molybdenum as component A and cobalt or nickel as component B, and therefore has a relatively high ammonia decomposition rate. Further, in each of the ammonia decomposition catalysts of Experimental Examples I-2 to I-4, particularly, cesium as component C is added to a composite oxide of molybdenum as component A and cobalt as component B, and therefore, each of these ammonia decomposition catalysts has a very high ammonia decomposition rate.

- Ammonia Decomposition Catalyst (II) - (Reference Examples)

Next, the following will explain production examples and performance evaluations of the ammonia decomposition catalyst (II). In this connection, for X-ray diffraction measurements, an X-ray diffractometer (product name "RINT-2400" available from Rigaku Corporation) was used. The X-ray diffraction measurements were made, using CuK$\alpha$ (0.154 nm) for an X-ray source, under the measurement conditions: the X-ray output was 50 kV and 300 mA; the divergence slit was 1.0 mm; the divergence vertical limit slit was 10 mm; the scanning speed was 5 degrees per minute; the sampling width was 0.02 degrees; and the scanning range was from 5 to 90 degrees.

<<Experimental Example II-1>> (Reference Example)

First, 80.00 g of cobalt nitrate hexahydrate was dissolved in 400.00 g of distilled water. Separately, 48.53 g of ammonium molybdate was gradually added to and dissolved in 250 g of boiled distilled water. After both aqueous solutions were mixed together, the mixture was heated and agitated, and was evaporated to dryness. The obtained solid product was dried at 120°C for 10 hours, was then baked at 350°C in a stream of nitrogen for 5 hours, and was baked at 500°C in a stream of air for 3 hours. It was confirmed by the X-ray diffraction measurements that $\alpha$-CoMoO$_4$ was obtained (see Table 2). In this connection, all the peaks shown in Table 2 are those derived from CoMoO$_4$.

[Table 2]

| Peak No. | 2θ | d Value | Intensity | Relative intensity |
|---|---|---|---|---|
| 1 | 13.06 | 6.7733 | 1669 | 7 |
| 2 | 14.04 | 6.3026 | 1506 | 6 |
| 3 | 23.20 | 3.8308 | 4205 | 17 |
| 4 | 25.30 | 3.5173 | 2540 | 10 |
| 5 | 26.38 | 3.3757 | 25644 | 100 |
| 6 | 27.06 | 3.2924 | 5301 | 21 |
| 7 | 27.34 | 3.2594 | 2275 | 9 |
| 8 | 28.30 | 3.1509 | 4188 | 17 |
| 9 | 31.94 | 2.7997 | 3836 | 15 |
| 10 | 32.76 | 2.7314 | 1436 | 6 |
| 11 | 33.54 | 64:04:22 | 4356 | 17 |
| 12 | 36.62 | 2.4519 | 2313 | 10 |
| 13 | 38.70 | 2.3248 | 2598 | 11 |
| 14 | 40.02 | 2.2511 | 2221 | 9 |
| 15 | 41.46 | 2.1762 | 1643 | 7 |
| 16 | 43.22 | 2.0915 | 1326 | 6 |
| 17 | 43.50 | 2.0787 | 1354 | 6 |
| 18 | 46.80 | 1.9395 | 1811 | 8 |
| 19 | 47.28 | 1.9210 | 2266 | 9 |

(continued)

| Peak No. | 2θ | d Value | Intensity | Relative intensity |
|---|---|---|---|---|
| 20 | 51.96 | 1.7584 | 2115 | 9 |
| 21 | 53.26 | 1.7185 | 1897 | 8 |
| 22 | 53.54 | 1.7102 | 1659 | 7 |
| 23 | 54.36 | 1.6863 | 1762 | 7 |
| 24 | 55.44 | 1.6560 | 1123 | 5 |
| 25 | 58.22 | 1.5834 | 1436 | 6 |
| 26 | 60.20 | 1.5359 | 1432 | 6 |
| 27 | 63.02 | 1.4738 | 1033 | 5 |
| 28 | 64.18 | 1.4499 | 1383 | 6 |
| 29 | 66.62 | 1.4026 | 1037 | 5 |
| 30 | 74.26 | 1.2761 | 1040 | 5 |

Further, a reaction tube made of SUS316 was filled with from 0.5 to 1.0 mL of $\alpha$-CoMoO$_4$, and the temperature was increased to 400°C while from 30 to 50 mL/min of a nitrogen gas (hereinafter abbreviated as "nitrogen") was allowed to flow. Then, an ammonia decomposition catalyst (hereinafter referred to as "CoMoO$_4$") was obtained by carrying out the treatment of increasing the temperature to 700°C while from 50 to 100 mL/min of an ammonia gas (hereinafter abbreviated as "ammonia") was allowed to flow, and holding the resulting product at 700°C for 5 hours (nitriding treatment). It was confirmed by the X-ray diffraction measurements that a metal nitride was formed (see Table 3). In this connection, among the peaks shown in Table 3, peak No. 3 is considered to be derived from Mo, but all the other peaks are those derived from Co$_3$Mo$_3$N.

[Table 3]

| Peak No. | 2θ | d Value | Intensity | Relative intensity |
|---|---|---|---|---|
| 1 | 35.44 | 2.5308 | 777 | 19 |
| 2 | 40.04 | 2.2500 | 1674 | 40 |
| 3 | 40.60 | 2.2202 | 530 | 13 |
| 4 | 42.56 | 2.1224 | 4235 | 100 |
| 5 | 46.56 | 1.9490 | 1597 | 38 |
| 6 | 59.84 | 1.5443 | 530 | 13 |
| 7 | 69.78 | 1.3466 | 673 | 16 |
| 8 | 72.74 | 1.2990 | 1864 | 45 |
| 9 | 88.08 | 1.1081 | 846 | 20 |

<<Experimental Example II-2>> (Reference Example)

First, 80.00 g of cobalt nitrate hexahydrate was dissolved in 400.00 g of distilled water. Separately, 48.53 g of ammonium molybdate was gradually added to and dissolved in 250 g of boiled distilled water. After both aqueous solutions were mixed together, the mixture was heated and agitated, and was evaporated to dryness. The obtained solid product was dried at 120°C for 10 hours, was then baked at 350°C in a stream of nitrogen for 5 hours, and was baked at 500°C in a stream of air for 3 hours. It was confirmed by the X-ray diffraction measurements that $\alpha$-CoMoO$_4$ was obtained.

Then, 0.089 g of cesium nitrate was dissolved in 3.23 g of distilled water. The resulting aqueous solution was uniformly penetrated into 6.00 g of $\alpha$-CoMoO$_4$ in a dripping manner, and the resulting product was dried at 90°C for 10 hours. Then, it was confirmed by the X-ray diffraction measurements that $\alpha$-CoMoO$_4$ was obtained (see Table 4). In this connection, all the peaks shown in Table 4 are those derived from CoMoO$_4$. Due to the addition of Cs, however, crystal lattice distortion causes some deviations in the values of $2\theta$.

[Table 4]

| Peak No. | $2\theta$ | d Value | Intensity | Relative intensity |
|---|---|---|---|---|
| 1 | 14.08 | 6.2848 | 1302 | 14 |
| 2 | 23.18 | 3.8340 | 1430 | 15 |
| 3 | 25.28 | 3.5201 | 2144 | 23 |
| 4 | 26.38 | 3.3757 | 9657 | 100 |
| 5 | 27.06 | 3.2924 | 2250 | 24 |
| 6 | 27.36 | 3.2570 | 1012 | 11 |
| 7 | 28.34 | 3.1466 | 3324 | 35 |
| 8 | 31.92 | 2.8014 | 1695 | 18 |
| 9 | 33.52 | 2.6712 | 1849 | 20 |
| 10 | 36.62 | 2.4519 | 919 | 10 |
| 11 | 38.64 | 2.3282 | 1134 | 12 |
| 12 | 43.24 | 2.0906 | 1556 | 17 |
| 13 | 47.42 | 1.9156 | 1147 | 12 |
| 14 | 51.98 | 1.7578 | 1209 | 13 |
| 15 | 53.36 | 1.7155 | 857 | 9 |
| 16 | 53.58 | 1.7090 | 860 | 9 |
| 17 | 54.32 | 1.6874 | 1044 | 11 |
| 18 | 60.18 | 1.5364 | 909 | 10 |
| 19 | 61.40 | 1.5087 | 935 | 10 |

Further, a reaction tube made of SUS316 was filled with from 0.5 to 1.0 mL of $\alpha$-CoMoO$_4$ containing Cs, and the temperature was increased to 400°C while from 30 to 50 mL/min of nitrogen was allowed to flow. Then, an ammonia decomposition catalyst (hereinafter referred to as "1% Cs-CoMoO$_4$") was obtained by carrying out the treatment of increasing the temperature to 700°C while from 50 to 100 mL/min of ammonia was allowed to flow, and holding the resulting product at 700°C for 5 hours (nitriding treatment). It was confirmed by the X-ray diffraction measurements that a metal nitride was formed (see Table 5). In this connection, among the peaks shown in Table 5, peak No. 4 is considered to be derived from Mo, but all the other peaks are those derived from Co$_3$Mo$_3$N. Due to the addition of Cs, however, crystal lattice distortion causes some deviations in the values of $2\theta$.

[Table 5]

| Peak No. | $2\theta$ | d Value | Intensity | Relative intensity |
|---|---|---|---|---|
| 1 | 32.44 | 2.7576 | 343 | 7 |
| 2 | 35.46 | 2.5294 | 755 | 15 |
| 3 | 40.02 | 2.2511 | 2006 | 38 |
| 4 | 40.66 | 2.2171 | 1144 | 22 |
| 5 | 42.56 | 2.1224 | 5343 | 100 |
| 6 | 43.00 | 2.1017 | 664 | 13 |
| 7 | 45.02 | 2.0120 | 309 | 6 |
| 8 | 46.54 | 1.9498 | 2667 | 50 |
| 9 | 49.54 | 1.8385 | 348 | 7 |

(continued)

| Peak No. | 2θ | d Value | Intensity | Relative intensity |
|---|---|---|---|---|
| 10 | 55.22 | 1.6621 | 402 | 8 |
| 11 | 59.84 | 1.5443 | 474 | 9 |
| 12 | 64.94 | 1.4348 | 722 | 14 |
| 13 | 68.10 | 1.3757 | 398 | 8 |
| 14 | 69.74 | 1.3473 | 695 | 13 |
| 15 | 72.74 | 1.2990 | 2135 | 40 |
| 16 | 74.52 | 1.2723 | 563 | 11 |
| 17 | 75.82 | 1.2537 | 382 | 8 |
| 18 | 76.30 | 1.2470 | 342 | 7 |
| 19 | 77.24 | 1.2341 | 498 | 10 |
| 20 | 81.84 | 1.1760 | 362 | 7 |
| 21 | 84.66 | 1.1439 | 331 | 7 |
| 22 | 85.52 | 1.1346 | 349 | 7 |
| 23 | 86.58 | 1.1234 | 431 | 9 |
| 24 | 88.14 | 1.1075 | 1433 | 27 |

<<Experimental Example II-3>> (Reference Example)

In the same manner as described in Experimental Example II-2, except that instead of using an aqueous solution obtained by dissolving 0.089 g of cesium nitrate in 3.23 g of distilled water in Experimental Example II-2, an aqueous solution obtained by dissolving 0.18 g of cesium nitrate in 3.21 g of distilled water was used, an ammonia decomposition catalyst (hereinafter referred to as "2% Cs-CoMoO4") was obtained. In this connection, it was confirmed by the X-ray diffraction measurements that the state of the product obtained after the cesium nitrate was uniformly penetrated and the resulting product was dried at 90°C for 10 hours was $\alpha$-CoMoO$_4$ (see Table 6). In this connection, all the peaks shown in Table 6 are those derived from CoMoO$_4$.

[Table 6]

| Peak No. | 2θ | d Value | Intensity | Relative intensity |
|---|---|---|---|---|
| 1 | 14.06 | 6.2937 | 1925 | 21 |
| 2 | 23.20 | 3.8308 | 1347 | 15 |
| 3 | 25.30 | 3.5173 | 2111 | 23 |
| 4 | 26.38 | 3.3757 | 9178 | 100 |
| 5 | 27.06 | 3.2924 | 1962 | 22 |
| 6 | 28.36 | 3.1444 | 3567 | 39 |
| 7 | 31.94 | 2.7997 | 1574 | 18 |
| 8 | 32.30 | 2.7693 | 1174 | 13 |
| 9 | 32.70 | 2.7363 | 1173 | 13 |
| 10 | 33.54 | 2.6697 | 1901 | 21 |
| 11 | 38.66 | 2.3271 | 1140 | 13 |
| 12 | 40.06 | 2.2489 | 1056 | 12 |
| 13 | 43.26 | 2.0897 | 1659 | 19 |

(continued)

| Peak No. | 2θ | d Value | Intensity | Relative intensity |
|---|---|---|---|---|
| 14 | 46.90 | 1.9356 | 892 | 10 |
| 15 | 47.42 | 1.9156 | 1482 | 17 |
| 16 | 52.04 | 1.7559 | 1205 | 14 |
| 17 | 53.30 | 1.7173 | 927 | 11 |
| 18 | 55.90 | 1.6434 | 834 | 10 |
| 19 | 58.22 | 1.5834 | 858 | 10 |
| 20 | 61.42 | 1.5083 | 908 | 10 |

It was confirmed by the X-ray diffraction measurements that in the state of the product obtained after being subjected to nitriding treatment, a metal nitride was formed (see Table 7). In this connection, among the peaks shown in Table 7, peak No. 3 is considered to be derived from Mo, but all the other peaks are those derived from $Co_3Mo_3N$. Due to the addition of Cs, however, crystal lattice distortion causes some deviations in the values of 2θ.

[Table 7]

| Peak No. | 2θ | d Value | Intensity | Relative intensity |
|---|---|---|---|---|
| 1 | 35.48 | 2.5280 | 333 | 18 |
| 2 | 40.02 | 2.2511 | 597 | 32 |
| 3 | 40.66 | 2.2171 | 1807 | 96 |
| 4 | 42.58 | 2.1215 | 1892 | 100 |
| 5 | 42.98 | 2.1026 | 1147 | 61 |
| 6 | 45.18 | 2.0052 | 573 | 31 |
| 7 | 46.56 | 1.9490 | 1014 | 54 |
| 8 | 59.92 | 1.5424 | 354 | 19 |
| 9 | 64.88 | 1.4360 | 462 | 25 |
| 10 | 69.76 | 1.3470 | 348 | 19 |
| 11 | 70.86 | 1.3287 | 351 | 19 |
| 12 | 72.74 | 1.2990 | 1446 | 77 |
| 13 | 73.78 | 1.2832 | 340 | 18 |
| 14 | 74.14 | 1.2779 | 366 | 20 |
| 15 | 74.52 | 1.2723 | 484 | 26 |
| 16 | 77.26 | 1.2339 | 770 | 41 |
| 17 | 78.82 | 1.2133 | 477 | 26 |
| 18 | 79.22 | 1.2082 | 433 | 23 |
| 19 | 79.68 | 1.2024 | 400 | 22 |
| 20 | 83.84 | 1.1530 | 385 | 21 |
| 21 | 85.02 | 1.1399 | 430 | 23 |
| 22 | 86.56 | 1.1236 | 503 | 27 |
| 23 | 88.14 | 1.1075 | 1181 | 63 |

<<Expefimental Example II-4>> (Reference Example)

In the same manner as described in Experimental Example II-2, except that instead of using an aqueous solution obtained by dissolving 0.089 g of cesium nitrate in 3.23 g of distilled water in Experimental Example II-2, an aqueous solution obtained by dissolving 0.46 g of cesium nitrate in 3.20 g of distilled water was used, an ammonia decomposition catalyst (hereinafter referred to as "5% Cs-CoMoO$_4$") was obtained. In this connection, it was confirmed by the X-ray diffraction measurements that the state of the product obtained after the cesium nitrate was uniformly penetrated and the resulting product was dried at 90°C for 10 hours was $\alpha$-CoMoO$_4$ (see Table 8). In this connection, all the peaks shown in Table 8 are those derived from CoMoO$_4$.

[Table 8]

| Peak No. | 2θ | d Value | Intensity | Relative intensity |
|---|---|---|---|---|
| 1 | 14.08 | 6.2848 | 1742 | 16 |
| 2 | 23.20 | 3.8308 | 1933 | 18 |
| 3 | 25.30 | 3.5173 | 2482 | 23 |
| 4 | 26.38 | 3.3757 | 11157 | 100 |
| 5 | 27.06 | 3.2924 | 2500 | 23 |
| 6 | 27.32 | 3.2617 | 939 | 9 |
| 7 | 28.34 | 3.1466 | 4362 | 40 |
| 8 | 31.92 | 2.8014 | 2127 | 20 |
| 9 | 32.26 | 2.7726 | 1298 | 12 |
| 10 | 32.58 | 2.7461 | 1200 | 11 |
| 11 | 33.52 | 2.6712 | 2154 | 20 |
| 12 | 36.62 | 2.4519 | 1269 | 12 |
| 13 | 38.68 | 2.3259 | 1362 | 13 |
| 14 | 40.08 | 2.2478 | 1020 | 10 |
| 15 | 43.22 | 2.0915 | 1768 | 16 |
| 16 | 46.86 | 1.9372 | 1086 | 10 |
| 17 | 47.36 | 1.9179 | 1528 | 14 |
| 18 | 52.00 | 1.7571 | 1185 | 11 |
| 19 | 53.24 | 1.7191 | 1245 | 12 |
| 20 | 53.54 | 1.7102 | 1009 | 10 |
| 21 | 64.22 | 1.4491 | 885 | 8 |

It was confirmed by the X-ray diffraction measurements that in the state of the product obtained after being subjected to nitriding treatment, a metal nitride was formed (see Table 9). In this connection, among the peaks shown in Table 9, peak No. 4 is considered to be derived from Mo, but all the other peaks are those derived from Co$_3$MO$_3$N. Due to the addition of Cs, however, crystal lattice distortion causes some deviations in the values of 2θ.

[Table 9]

| Peak No. | 2θ | d Value | Intensity | Relative intensity |
|---|---|---|---|---|
| 1 | 26.38 | 3.3757 | 1161 | 40 |
| 2 | 35.48 | 2.5280 | 667 | 23 |
| 3 | 40.02 | 2.2511 | 1396 | 48 |
| 4 | 40.68 | 2.2161 | 1846 | 64 |

(continued)

| Peak No. | 2θ | d Value | Intensity | Relative intensity |
|---|---|---|---|---|
| 5 | 42.56 | 2.1224 | 2923 | 100 |
| 6 | 43.00 | 2.1017 | 1163 | 40 |
| 7 | 45.20 | 2.0044 | 639 | 22 |
| 8 | 46.56 | 1.9490 | 1370 | 47 |
| 9 | 69.86 | 1.3453 | 524 | 18 |
| 10 | 72.12 | 1.3086 | 524 | 18 |
| 11 | 72.52 | 1.3024 | 1309 | 45 |
| 12 | 72.76 | 1.2987 | 1679 | 58 |
| 13 | 74.50 | 1.2726 | 540 | 19 |
| 14 | 77.26 | 1.2339 | 613 | 21 |
| 15 | 88.10 | 1.1079 | 1042 | 36 |

<<Experimental Examples II-5 to II-7>> (Reference Examples)

In the same manner as described in Experimental Example II-1, except that the amounts of cobalt nitrate hexahydrate and ammonium molybdate in Experimental Example II-1 were appropriately changed, an ammonia decomposition catalyst having a molar ratio of cobalt to molybdenum (Co/Mo) of 1.05 (hereinafter referred to as "Co/Mo = 1.05") was obtained in Experimental Example II-5; an ammonia decomposition catalyst having a molar ratio (Co/Mo) of 1.10 (hereinafter referred to as "Co/Mo = 1.10") was obtained in Experimental Example II-6; and an ammonia decomposition catalyst having a molar ratio (Co/Mo) of 0.90 (hereinafter referred to as "Co/Mo = 0.90") was obtained in Experimental Example II-7. In this connection, it was confirmed by the X-ray diffraction measurements that the states of the products obtained after being baked at 350°C in a stream of nitrogen for 5 hours and baked at 500°C in a stream of air for 3 hours were each $\alpha$-CoMoO$_4$. In this connection, the data, such as the peak intensities, of the ammonia decomposition catalysts of Experimental Examples II-5 to II-7, although they are not shown in a table, were almost the same as those of the ammonia decomposition catalysts of Experimental Examples II-1 to II-4.

<<Experimental Example II-8>> (Reference Example)

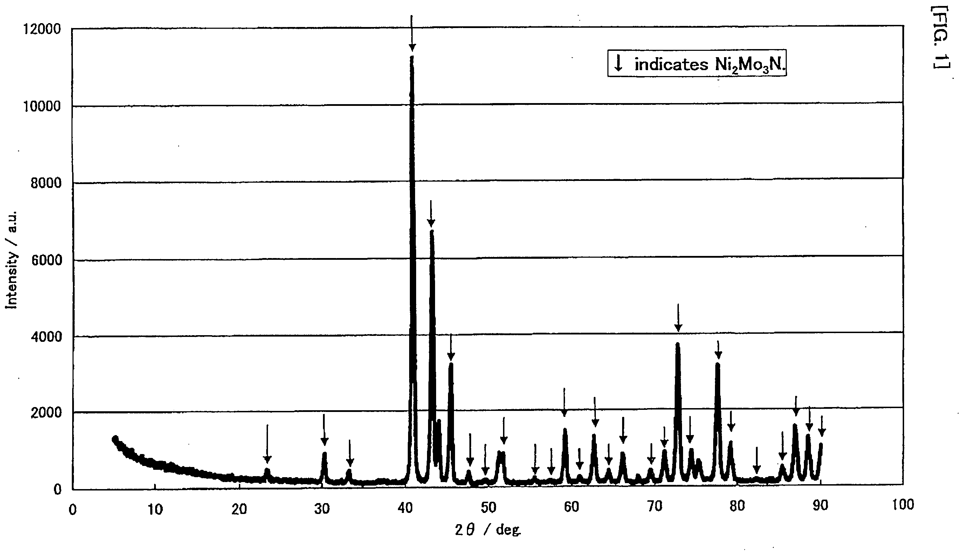

In the same manner as described in Experimental Example II-1, except that instead of using cobalt nitrate hexahydrate in Experimental Example II-1, nickel nitrate hexahydrate was used, an ammonia decomposition catalyst (hereinafter referred to as "NiMoO$_4$") was obtained. In this connection, it was confirmed by the X-ray diffraction measurements that the state of the product obtained after being baked at 350°C in a stream of nitrogen for 5 hours and baked at 500°C in a stream of air for 3 hours was NiMoO4 of the $\alpha$-CoMoO4 type. FIG. 1 shows the X-ray diffraction patterns of the obtained ammonia decomposition catalyst. As can be seen from FIG. 1, it is found that almost the entire catalyst has changed to a nitride.

<<Experimental Example II-9>> (Reference Example)

In the same manner as described in Experimental Example II-8, except that after it was confirmed by the X-ray diffraction measurements that the state of the product obtained after being baked at 350°C in a stream of nitrogen for 5 hours and baked at 500°C in a stream of air for 3 hours was NiMoO4 of the $\alpha$-CoMoO4 type in Experimental Example II-8, an aqueous solution obtained by dissolving 0.075 g of cesium nitrate in 1.55 g of distilled water was uniformly penetrated into the NiMoO4 of the $\alpha$-CoMoO4 type in a dripping manner, the resulting product was dried at 90°C for 10 hours, and the resulting product was then subjected to nitriding treatment, an ammonia decomposition catalyst (hereinafter referred to as "1% Cs-NiMoO$_4$") was obtained. In this connection, it was confirmed by the X-ray diffraction measurements that the state of the product obtained before being subjected to nitriding treatment was NiMoO$_4$ of the $\alpha$-CoMoO$_4$ type. The diffraction patterns of the obtained ammonia decomposition catalyst, although they are not shown in a figure, were similar to those of the ammonia decomposition catalyst of Experimental Example II-8.

<<Experimental Examples II-10 and II-11>> (Reference Examples)

In the same manner as described in Experimental Example II-9, except that instead of using an aqueous solution obtained by dissolving 0.075 g of cesium nitrate in 1.55 g of distilled water in Experimental Example II-9, an aqueous solution obtained by dissolving 0.15 g of cesium nitrate in 1.55 g of distilled water was used in Experimental Example 11-10, and an aqueous solution obtained by dissolving 0.40 g of cesium nitrate in 1.55 g of distilled water was used in Experimental Example II-11, an ammonia decomposition catalyst (hereinafter referred to as "2% Cs-NiMoO$_4$") and an ammonia decomposition catalyst (hereinafter referred to as "5% Cs-NiMoO$_4$") were obtained, respectively. In this connection, it was confirmed by the X-ray diffraction measurements that the state of the product obtained before being subjected to nitriding treatment was NiMoO$_4$ of the $\alpha$-CoMoO$_4$ type. The diffraction patterns of the obtained ammonia decomposition catalyst, although they are not shown in a figure, were similar to those of the ammonia decomposition catalyst of Experimental Example II-8.

<<Experimental Example II-12>> (Reference Example)

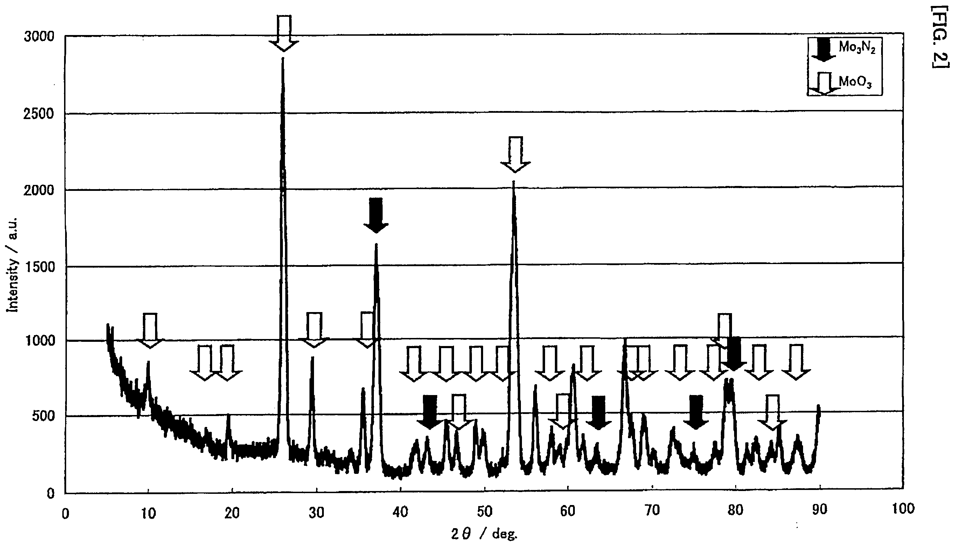

A reaction tube made of SUS316 was filled with from 0.5 to 1.0 mL of molybdenum oxide (MoO$_3$), which was commercially available, and the temperature was increased to 400°C while from 30 to 50 mL/min of nitrogen was allowed to flow. Then, an ammonia decomposition catalyst (hereinafter referred to as "MoO$_3$") was obtained by carrying out the treatment of increasing the temperature to 700°C while from 50 to 100 mL/min of ammonia was allowed to flow, and holding the resulting product at 700°C for 5 hours (nitriding treatment). FIG. 2 shows the X-ray diffraction patterns of the obtained ammonia decomposition catalyst. As can be seen from FIG. 1, it is found that almost the entire catalyst remains as the original oxide, and has only partially changed to a nitride.

<<Experimental Example II-13>> (Reference Example)

An aqueous solution obtained by dissolving 0.21 g of cesium nitrate in 1.62 g of distilled water was uniformly penetrated in a dripping manner into 7.00 g of molybdenum oxide (MoO$_3$), which was commercially available, and the resulting product was dried at 120°C for 10 hours, was then baked at 350°C in a stream of nitrogen for 5 hours, and was baked at 500°C in a stream of air for 3 hours.
Further, a reaction tube made of SUS316 was filled with from 0.5 to 1.0 mL of the baked product, and the temperature was increased to 400°C while from 30 to 50 mL/min of nitrogen was allowed to flow. Then, an ammonia decomposition catalyst (hereinafter referred to as "2% Cs-MoO$_3$") was obtained by carrying out the treatment of increasing the temperature to 700°C while from 50 to 100 mL/min of ammonia was allowed to flow, and holding the resulting product at 700°C for 5 hours (nitriding treatment). The diffraction patterns of the obtained ammonia decomposition catalyst, although they were not shown in a figure, were similar to those of the ammonia decomposition catalyst of Experimental Example 12.

<<Experimental Examples II-14 and II-15>> (Reference Examples)

In the same manner as described in Experimental Example II-13, except that instead of using an aqueous solution obtained by dissolving 0.21 g of cesium nitrate in 1.62 g of distilled water in Experimental Example II-13, an aqueous solution obtained by dissolving 0.54 g of cesium nitrate in 1.62 g of distilled water was used in Experimental Example II-14, and an aqueous solution obtained by dissolving 1.14 g of cesium nitrate in 1.62 g of distilled water was used in Experimental Example II-15, an ammonia decomposition catalyst (hereinafter referred to as "5% Cs-MoO3") and an ammonia decomposition catalyst (hereinafter referred to as "10% Cs-MoO3") were obtained, respectively. The diffraction patterns of the obtained ammonia decomposition catalyst, although they were not shown in a figure, were similar to those of the ammonia decomposition catalyst of Experimental Example II-12.

<<Experimental Example II-16>> (Reference Example)

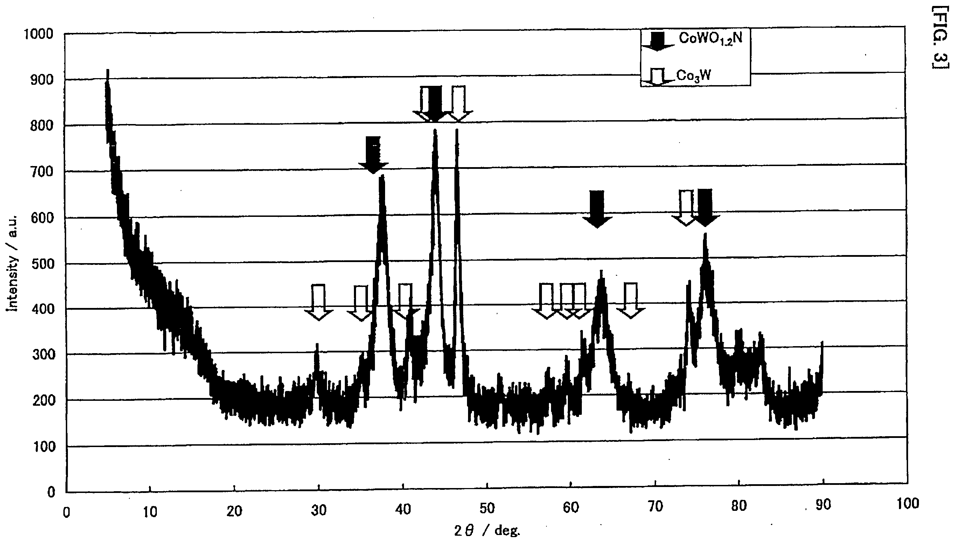

First, 9.49 g of cobalt nitrate hexahydrate was dissolved in 41.18 g of distilled water, and 15.13 g of an ammonium metatungstate aqueous solution (abbreviated name "MW-2" available from Nippon Inorganic Colour & Chemical Co., Ltd.; containing 50% by mass of tungsten oxide) was added to the resulting product. After both solutions were mixed together, the mixture was heated and agitated, and was evaporated to dryness. The obtained solid product was dried at 120°C for 10 hours, was then baked at 350°C in a stream of nitrogen for 5 hours, and was baked at 500°C in a stream of air for 3 hours.
Further, a reaction tube made of SUS316 was filled with from 0.5 to 1.0 mL of the baked product, and the temperature was increased to 400°C while from 30 to 50 mL/min of nitrogen was allowed to flow. Then, an ammonia decomposition catalyst (hereinafter referred to as "CoWO$_4$") was obtained by carrying out the treatment of increasing the temperature to 700°C while from 50 to 100 mL/min of ammonia was allowed to flow, and holding the resulting product at 700°C for 5 hours (nitriding treatment). FIG. 3 shows the X-ray diffraction patterns of the obtained ammonia decomposition catalyst. As can be seen from FIG. 3, it is found that the catalyst has changed so as to include an oxide partially nitrided (CoWO$_{1.2}$N) and a metal obtained by reducing an oxide (Co$_3$W).

<<Experimental Example II-17>> (Reference Example)

First, 13.36 g of manganese nitrate hexahydrate was dissolved in 67.08 g of distilled water. Separately, 8.22 g of ammonium molybdate was gradually added to and dissolved in 41.04 g of boiled distilled water. After both aqueous solutions were mixed together, the mixture was heated and agitated, and was evaporated to dryness. The obtained solid product was dried at 120°C for 10 hours, was then baked at 350°C in a stream of nitrogen for 5 hours, and was baked at 500°C in a stream of air for 3 hours. It was confirmed by the X-ray diffraction measurements that $\alpha$- MnMoO$_4$ was obtained.

Further, a reaction tube made of SUS316 was filled with from 0.5 to 1.0 mL of the baked product, and the temperature was increased to 400°C while from 30 to 50 mL/min of nitrogen was allowed to flow. Then, an ammonia decomposition catalyst (hereinafter referred to as "MnMoO$_4$") was obtained by carrying out the treatment of increasing the temperature to 700°C while from 50 to 100 mL/min of ammonia was allowed to flow, and holding the resulting product at 700°C for 5 hours (nitriding treatment).

<<Experimental Example II-18>> (Reference Example)

First, 11.81 g of calcium nitrate tetrahydrate was dissolved in 60.10 g of distilled water. Separately, 8.83 g of ammonium molybdate was gradually added to and dissolved in 45.06 g of boiled distilled water. After both aqueous solutions were mixed together, the mixture was heated and agitated, and was evaporated to dryness. The obtained solid product was dried at 120°C for 10 hours, was then baked at 350°C in a stream of nitrogen for 5 hours, and was baked at 500°C in a stream of air for 3 hours.

Further, a reaction tube made of SUS316 was filled with from 0.5 to 1.0 mL of the baked product, and the temperature was increased to 400°C while from 30 to 50 mL/min of nitrogen was allowed to flow. Then, an ammonia decomposition catalyst (hereinafter referred to as "CaMoO$_4$") was obtained by carrying out the treatment of increasing the temperature to 700°C while from 50 to 100 mL/min of ammonia was allowed to flow, and holding the resulting product at 700°C for 5 hours (nitriding treatment).

<<Experimental Example II-19>> (Reference Example)

First, 13.92 g of magnesium nitrate hexahydrate was dissolved in 70.02 g of distilled water. Separately, 9.58 g of ammonium molybdate was gradually added to and dissolved in 48.03 g of boiled distilled water. After both aqueous solutions were mixed together, the mixture was heated and agitated, and was evaporated to dryness. The obtained solid product was dried at 120°C for 10 hours, was then baked at 350°C in a stream of nitrogen for 5 hours, and was baked at 500°C in a stream of air for 3 hours.

Further, a reaction tube made of SUS316 was filled with from 0.5 to 1.0 mL of the baked product, and the temperature was increased to 400°C while from 30 to 50 mL/min of nitrogen was allowed to flow. Then, an ammonia decomposition catalyst (hereinafter referred to as "MgMoO$_4$") was obtained by carrying out the treatment of increasing the temperature to 700°C while from 50 to 100 mL/min of ammonia was allowed to flow, and holding the resulting product at 700°C for 5 hours (nitriding treatment).

<<Ammonia Decomposition Reaction>>

Using each of the catalysts obtained in Experimental Examples II-1 to II-19 and ammonia having a purity of 99.9% or higher by volume, ammonia decomposition reaction was carried out to decompose the ammonia into nitrogen and hydrogen.

In this connection, the rates of ammonia decomposition were measured (calculated by the formula below) under the conditions: the space velocity of ammonia was 6,000 h$^{-1}$; the reaction temperature was 400°C, 450°C, or 500°C; and the reaction pressure was 0.101325 MPa (normal pressure). The results are shown in Table 10.

[Formula 3]

$$\text{Ammonia decomposition rate (\%)} = [(\text{ammonia concentration at reactor inlet}) - (\text{ammonia concentration at reactor outlet})] \times 100 / (\text{ammonia concentration at reactor inlet})$$

[Table 10]

| | Catalyst name | Ammonia decomposition rates | | |
|---|---|---|---|---|
| | | 500°C | 450°C | 400°C |
| Experimental Example II-1* | $CoMoO_4$ | 79.4% | 34.9% | 12.3% |
| Experimental Example II-2* | 1% Cs-$CoMoO_4$ | 100.0% | 72.3% | 25.4% |
| Experimental Example II-3* | 2% Cs-$CoMoO_4$ | 100.0% | 56.8% | 18.1% |
| Experimental Example II-4* | 5% Cs-$CoMoO_4$ | 100.0% | 55.4% | 18.9% |
| Experimental Example II-5* | Co/Mo = 1.05 | 84.0% | 40.1% | 19.6% |
| Experimental Example II-6* | Co/Mo = 1.10 | 79.9% | 31.8% | 8.5% |
| Experimental Example II-7* | Co/Mo = 0.90 | 77.6% | 30.7% | 9.9% |
| Experimental Example II-8* | $NiMoO_4$ | 69.2% | 23.8% | 7.1% |
| Experimental Example II-9* | 1% Cs-$NiMoO_4$ | 61.3% | 16.7% | 4.4% |
| Experimental Example II-10* | 2% Cs-$NiMoO_4$ | 59.8% | 19.3% | 5.5% |
| Experimental Example II-11* | 5% Cs-$NiMoO_4$ | 42.8% | 10.0% | 3.9% |
| Experimental Example II-12* | $MoO_3$ | 44.3% | 12.1% | - |
| Experimental Example II-13* | 2% Cs-$MoO_3$ | 17.8% | 3.6% | - |
| Experimental Example II-14* | 5% Cs-$MoO_3$ | 15.8% | 3.7% | - |
| Experimental Example II-15* | 10% Cs-$MoO_3$ | 12.5% | 3.6% | - |
| Experimental Example II-16* | $CoWO_4$ | 12.1% | - | - |
| Experimental Example II-17* | $MnMoO_4$ | 16.3% | 4.6% | - |
| Experimental Example II-18* | $CaMoO_4$ | 8.6% | - | - |
| Experimental Example II-19* | $MgMoO_4$ | 35.0% | 9.3% | - |
| * Reference Example | | | | |

As can be seen from Table 10, all the ammonia decomposition catalysts of Experimental Examples II-1 to 11-19 can efficiently decompose high-concentration ammonia, which has a purity of 99.9% or higher by volume, into nitrogen and hydrogen at relatively low temperatures, i.e., from 400°C to 500°C, and at a high space velocity, i.e., 6,000 h$^{-1}$. Further, each of the ammonia catalysts of Experimental Examples II-1 to II-11 is a composite oxide of molybdenum as component A and cobalt or nickel as component B, and therefore has a relatively high ammonia decomposition rate. Further, in each of the ammonia decomposition catalysts of Experimental Examples II-2 to II-4, particularly, cesium as component C is added to a composite oxide of molybdenum as component A and cobalt as component B, and therefore, each of these ammonia decomposition catalysts has a very high ammonia decomposition rate.

- Ammonia Decomposition Catalyst (III) -

Next, the following will explain production examples and performance evaluations of the ammonia decomposition catalyst (III). In this connection, for the measurements of the specific surface area, an automatic BET specific surface area analyzer (product name "Marcsorb HM Model-1201" available from Mountech Co., Ltd.) was used. Further, for X-ray diffraction measurements and the measurements of the crystallite size, an X-ray diffractometer (product name "X'Pert PRO MPD" available from Spectris Co., Ltd.) was used. The X-ray diffraction measurements and the measurements of the crystallite size were made, using CuKa (0.154 nm) for an X-ray source, under the measurement conditions : the X-ray output was 45 kV and 40 mA; the step size was 0.017°; the scan step time was 100 seconds; and the measurement temperature was 25°C. The measurement range was appropriately selected depending on the iron group metal and the metal oxide to be measured. Further, the amount of catalyst composition was determined by elemental analysis measurements using an X-ray fluorescence analyzer (product name "RIX2000" available from Rigaku Corporation). The measurement conditions were an X-ray output of 50 kV and 50 mA, and the calculation method was the FP method (fundamental parameter method).

<<Experimental Example III-1>> (Reference Example)

An aqueous solution obtained by dissolving 5.51 g of nickel nitrate hexahydrate in 4.55 g of distilled water was mixed in a dripping manner with 9.01 g of γ-alumina (available from Strem Chemicals, Inc.) dried at 120°C overnight. The mixture was sealed and left at rest for an hour, and was then dried on a hot-water bath. The dried mixture was baked at 350°C in a stream of nitrogen for 5 hours, and was then baked at 500°C in a stream of air for 3 hours. Catalyst 1 was obtained by filling a ring furnace with the baked product, and reducing the resulting product at 450°C for 5 hours, using 10% by volume of a hydrogen gas (diluted with nitrogen). In this connection, the amount of nickel supported on catalyst 1 was 11% by mass.

<<Experimental Example III-2>> (Reference Example)

An aqueous solution 1 was obtained by dissolving 1.001 g of cesium nitrate in 5.0476 g of distilled water. Then, 1.4768 g of the aqueous solution 1 was added to and mixed with 2.6787 g of the catalyst 1, and the resulting product was then dried at 90°C overnight. Then, 1.4804 g of the aqueous solution 1 was further added to and mixed with the dried mixture, and the resulting product was then dried at 90°C overnight. The dried mixture was baked at 350°C in a stream of nitrogen for 5 hours, and was then baked at 500°C in a stream of air for 3 hours. Catalyst 2 was obtained by filling a ring furnace with the baked product, and reducing the resulting product at 450°C for 5 hours, using 10% by volume of a hydrogen gas (diluted with nitrogen).

<<Experimental Example III-3>> (Reference Example)

An aqueous solution 2 was obtained by dissolving 2.0011 g of cesium nitrate in 4.9936 g of distilled water. Then, 1.5130 g of the aqueous solution 2 was added to and mixed with 2.8595 g of the catalyst 1, and the resulting product was then dried at 90°C overnight. Then, 1.4367 g of the aqueous solution 2 was further added to and mixed with the dried mixture, and the resulting product was then dried at 90°C overnight. The dried mixture was baked at 350°C in a stream of nitrogen for 5 hours, and was then baked at 500°C in a stream of air for 3 hours. Catalyst 3 was obtained by filling a ring furnace with the baked product, and reducing the resulting product at 450°C for 5 hours, using 10% by volume of a hydrogen gas (diluted with nitrogen).

<<Experimental Example III-4>> (Reference Example)

An aqueous solution obtained by dissolving 2.61 g of nickel nitrate hexahydrate in 5.14 g of distilled water was mixed in a dripping manner with 10.00 g of γ-alumina (available from Strem Chemicals, Inc.) dried at 120°C overnight. The mixture was sealed and left at rest for an hour, and was then dried on a hot-water bath. The dried mixture was baked at 350°C in a stream of nitrogen for 5 hours, and was then baked at 500°C in a stream of air for 3 hours. Catalyst 4 was obtained by filling a ring furnace with the baked product, and reducing the resulting product at 450°C for 5 hours, using 10% by volume of a hydrogen gas (diluted with nitrogen). In this connection, the amount of nickel supported on catalyst 4 was 5% by mass.

<<Experimental Example III-5>> (Reference Example)

An aqueous solution obtained by dissolving 12.39 g of nickel nitrate hexahydrate in 5.00 g of distilled water was mixed in a dripping manner with 10.02 g of γ-alumina (available from Strem Chemicals, Inc.) dried at 120°C overnight. The mixture was sealed and left at rest for an hour, and was then dried on a hot-water bath. The dried mixture was baked at 350°C in a stream of nitrogen for 5 hours, and was then baked at 500°C in a stream of air for 3 hours. Catalyst 5 was obtained by filling a ring furnace with the baked product, and reducing the resulting product at 450°C for 5 hours, using 10% by volume of a hydrogen gas (diluted with nitrogen). In this connection, the amount of nickel supported on catalyst 5 was 20% by mass.

<<Experimental Example III-6>> (Reference Example)

$\gamma$-Alumina (available from Sumitomo Chemical Co., Ltd.) was heat-treated at 950°C for 10 hours, was then pulverized, and was dried at 120°C overnight. Due to the heat treatment, the crystal phase of the alumina has made a transition from the $\gamma$-phase to the $\kappa$-phase. An aqueous solution obtained by dissolving 17.34 g of nickel nitrate hexahydrate in 28.0 g of distilled water was mixed in a dripping manner with 35 g of the heat-treated alumina. Catalyst 6 was obtained by drying the mixture on a hot-water bath, then filling a ring furnace with the dried mixture, and reducing the mixture at 450°C for 2 hours, using 10% by volume of a hydrogen gas (diluted with nitrogen). In this connection, the amount of nickel supported on catalyst 6 was 10% by mass.

<<Experimental Example III-7>> (Reference Example)

In the same manner as described in Experimental Example III-6, except that instead of using 17.34 g of nickel nitrate hexahydrate in Experimental Example III-6, 17.28 g of cobalt nitrate hexahydrate was used, catalyst 7 was obtained.

<<Experimental Example III-8>> (Reference Example)

$\gamma$-Alumina (available from Sumitomo Chemical Co., Ltd.) was heat-treated at 950°C for 10 hours, was then pulverized, and was dried at 120°C overnight. Due to the heat treatment, the crystal phase of the alumina has made a transition from the $\gamma$-phase to the $\kappa$-phase. An aqueous solution obtained by dissolving 10.05 g of magnesium nitrate in 24.0 g of distilled water was mixed in a dripping manner with 30 g of the heat-treated alumina. The mixture was dried on a hot-water bath, and was then baked at 500°C in a stream of air for 2 hours, whereby heat-treated alumina was obtained, to which magnesium oxide was added. Then, 20 g of the magnesium-oxide-added heat-treated alumina was impregnated with an aqueous solution obtained by dissolving 6.7 g of nickel nitrate hexahydrate in 16.0 g of distilled water, such that the magnesium-oxide-added heat-treated alumina uniformly supported the nickel nitrate hexahydrate. Catalyst 8 was obtained by drying the mixture on a hot-water bath, then filling a ring furnace with the dried mixture, and reducing the mixture at 450°C for 2 hours, using 10% by volume of a hydrogen gas (diluted with nitrogen).

<<Experimental Example III-9>> (Reference Example)

In the same manner as described in Experimental Example III-8, except that instead of using 10.05 g of magnesium nitrate in Experimental Example III-8, 2.104 g of an ammonium metatungstate aqueous solution (abbreviated name "MW-2" available from Nippon Inorganic Colour & Chemical Co., Ltd.; containing 50% by mass of tungsten oxide) was used, catalyst 9 was obtained.

<<Experimental Example III-10>> (Reference Example)

In the same manner as described in Experimental Example III-6, except that instead of using 17.34 g of nickel nitrate hexahydrate in Experimental Example III-6, 6.61 g of nickel sulfate hexahydrate was used, and reduction treatment in a ring furnace using 10% by volume of a hydrogen gas was not carried out, catalyst 10 was obtained.

<<Experimental Example III-11>>

A uniform aqueous solution was prepared by forming a mixture by adding 34.89 g of nickel nitrate hexahydrate, 5.21 g of cerium nitrate hexahydrate, and 5.91 g of a zirconium oxynitrate aqueous solution (product name "Zircosol ZN" available from Daiichi Kigenso Kagaku Kogyo Co., Ltd.; containing 25% by mass of zirconium oxide) to 500 mL of distilled water. A precipitate was generated by dripping the aqueous solution into an aqueous solution obtained by dissolving 88.6 g of potassium hydroxide in 500 mL of distilled water that was being agitated. The precipitate was filtered, was washed in water, and was then dried at 120°C overnight. Catalyst 11 was obtained by pulverizing the dried precipitate; filling a ring furnace with the resulting product, and reducing the resulting product at 600°C for an hour, using 10% by volume of a hydrogen gas (diluted with nitrogen).

<<Experimental Example III-12>>

In the same manner to Experimental Example III-11, except that instead of using 34.89 g of nickel nitrate hexahydrate in Experimental Example III-11, 34.92 g of cobalt nitrate hexahydrate was used, catalyst 12 was obtained.

«Experimental Example III-13>>

A uniform aqueous solution was prepared by forming a mixture by adding 48.48 g of iron nitrate nonahydrate, 5.21 g of cerium nitrate hexahydrate, and 5.91 g of a zirconium oxynitrate aqueous solution (product name "Zircosol ZN" available from Daiichi Kigenso Kagaku Kogyo Co., Ltd.; containing 25% by mass of zirconium oxide) to 500 mL of distilled water. A precipitate was generated by dripping the aqueous solution into 88.9 g of ammonia water containing 25% by mass of ammonia. The precipitate was filtered, was washed in water, and was then dried at 120°C overnight. Catalyst 13 was obtained by pulverizing the dried precipitate, filling a ring furnace with the resulting product, and reducing the resulting product at 600°C for an hour, using 10% by volume of a hydrogen gas (diluted with nitrogen).

<<Experimental Example III-14>>

A uniform aqueous solution was prepared by forming a mixture by adding 48.48 g of iron nitrate nonahydrate, 5.21 g of cerium nitrate hexahydrate, and 5.91 g of a zirconium oxynitrate aqueous solution (product name "Zircosol ZN" available from Daiichi Kigenso Kagaku Kogyo Co., Ltd.; containing 25% by mass of zirconium oxide) to 500 mL of distilled water. A precipitate was generated by dripping the aqueous solution into 600 g of ammonia water containing 25% by mass of ammonia while carrying out agitation. The precipitate was filtered, was washed in water, and was then dried at 120°C overnight. Catalyst 14 was obtained by pulverizing the dried precipitate, filling a ring furnace with the resulting product, and reducing the resulting product at 600°C for an hour, using 10% by volume of a hydrogen gas (diluted with nitrogen).

<<Experimental Example III-15>>

A uniform aqueous solution was prepared by forming a mixture by adding 20.20 g of iron nitrate nonahydrate, 14.54 g of nickel nitrate hexahydrate, 4.34 g of cerium nitrate hexahydrate, and 4.93 g of a zirconium oxynitrate aqueous solution (product name "Zircosol ZN" available from Daiichi Kigenso Kagaku Kogyo Co., Ltd.; containing 25% by mass of zirconium oxide) to 500 mL of distilled water. A precipitate was generated by dripping the aqueous solution into an aqueous solution obtained by dissolving 87.9 g of potassium hydroxide in 500 mL of distilled water that was being agitated. The precipitate was filtered, was washed in water, and was then dried at 120°C overnight. Catalyst 15 was obtained by pulverizing the dried precipitate, filling a ring furnace with the resulting product, and reducing the resulting product at 600°C for an hour, using 10% by volume of a hydrogen gas (diluted with nitrogen).

<<Experimental Example III-16>>

A uniform aqueous solution was prepared by forming a mixture by adding 32.17 g of cobalt nitrate hexahydrate, 0.33 g of zinc nitrate hexahydrate, 4.87 g of cerium nitrate hexahydrate, and 5.42 g of a zirconium oxynitrate aqueous solution (product name "Zircosol ZN" available from Daiichi Kigenso Kagaku Kogyo Co., Ltd.; containing 25% by mass of zirconium oxide) to 640 mL of distilled water. A precipitate was generated by dripping the aqueous solution into an aqueous solution obtained by dissolving 112.7 g of potassium hydroxide in 640 mL of distilled water that was being agitated. The precipitate was filtered, was washed in water, and was then dried at 120°C overnight. Catalyst 16 was obtained by pulverizing the dried precipitate, filling a ring furnace with the resulting product, and reducing the resulting product at 600°C for an hour, using 10% by volume of a hydrogen gas (diluted with nitrogen).

<<Experimental Example III-17>>

A uniform aqueous solution was prepared by forming a mixture by adding 34.92 g of cobalt nitrate hexahydrate, 5.21 g of cerium nitrate hexahydrate, and 4.60 g of yttrium nitrate hexahydrate to 500 mL of distilled water. A precipitate was generated by dripping the aqueous solution into an aqueous solution obtained by dissolving 87.5 g of potassium hydroxide in 500 mL of distilled water that was being agitated. The precipitate was filtered, was washed in water, and was then dried at 120°C overnight. Catalyst 17 was obtained by pulverizing the dried precipitate, filling a ring furnace with the resulting product, and reducing the resulting product at 600°C for an hour, using 10% by volume of a hydrogen gas (diluted with nitrogen).

EP 2 332 646 B1

<<Experimental Example III-18>>

In the same manner as described in Experimental Example III-17, except that instead of using 4.60 g of yttrium nitrate hexahydrate in Experimental Example III-17, 5.20 g of lanthanum nitrate hexahydrate was used, catalyst 18 was obtained.

<<Experimental Example III-19>>

A uniform aqueous solution was prepared by forming a mixture by adding 34.92 g of cobalt nitrate hexahydrate, 17.4 g of cerium nitrate hexahydrate, and 19.8 g of a zirconium oxynitrate aqueous solution (product name "Zircosol ZN" available from Daiichi Kigenso Kagaku Kogyo Co., Ltd.; containing 25% by mass of zirconium oxide) to 500 mL of distilled water. A precipitate was generated by dripping the aqueous solution into an aqueous solution obtained by dissolving 138 g of potassium hydroxide in 500 mL of distilled water that was being agitated. The precipitate was filtered, was washed in water, and was then dried at 120°C overnight. Catalyst 19 was obtained by pulverizing the dried precipitate, filling a ring furnace with the resulting product, and reducing the resulting product at 600°C for an hour, using 10% by volume of a hydrogen gas (diluted with nitrogen).

<<Experimental Example III-20>>

A uniform aqueous solution was prepared by forming a mixture by adding 34.92 g of cobalt nitrate hexahydrate, 2.60 g of cerium nitrate hexahydrate, and 2.95 g of a zirconium oxynitrate aqueous solution (product name "Zircosol ZN" available from Daiichi Kigenso Kagaku Kogyo Co., Ltd.; containing 25% by mass of zirconium oxide) to 500 mL of distilled water. A precipitate was generated by dripping the aqueous solution into an aqueous solution obtained by dissolving 77.9 g of potassium hydroxide in 500 mL of distilled water that was being agitated. The precipitate was filtered, was washed in water, and was then dried at 120°C overnight. Catalyst 20 was obtained by pulverizing the dried precipitate, filling a ring furnace with the resulting product, and reducing the resulting product at 600°C for an hour, using 10% by volume of a hydrogen gas (diluted with nitrogen).

<<Experimental Example III-21>> (Reference Example)

A uniform aqueous solution was prepared by forming a mixture by adding 29.1 g of cobalt nitrate hexahydrate and 9.86 g of a zirconium oxynitrate aqueous solution (product name "Zircosol ZN" available from Daiichi Kigenso Kagaku Kogyo Co., Ltd.; containing 25% by mass of zirconium oxide) to 500 mL of distilled water. A precipitate was generated by dripping the aqueous solution into an aqueous solution obtained by dissolving 75.0 g of potassium hydroxide in 500 mL of distilled water that was being agitated. The precipitate was filtered, was washed in water, and was then dried at 120°C overnight. Catalyst 21 was obtained by pulverizing the dried precipitate, filling a ring furnace with the resulting product, and reducing the resulting product at 600°C for an hour, using 10% by volume of a hydrogen gas (diluted with nitrogen).

<<Experimental Example III-22>>

A uniform aqueous solution was prepared by forming a mixture by adding 34.92 g of cobalt nitrate hexahydrate, 1.74 g of cerium nitrate hexahydrate, and 9.86 g of a zirconium oxynitrate aqueous solution (product name "Zircosol ZN" available from Daiichi Kigenso Kagaku Kogyo Co., Ltd.; containing 25% by mass of zirconium oxide) to 500 mL of distilled water. A precipitate was generated by dripping the aqueous solution into an aqueous solution obtained by dissolving 45.0 g of potassium hydroxide in 500 mL of distilled water that was being agitated. The precipitate was filtered, was washed in water, and was then dried at 120°C overnight. Catalyst 22 was obtained by pulverizing the dried precipitate, filling a ring furnace with the resulting product, and reducing the resulting product at 600°C for an hour, using 10% by volume of a hydrogen gas (diluted with nitrogen).

<<Experimental Example III-23>> (Reference Example)

A uniform aqueous solution was prepared by forming a mixture by adding 29.1 g of cobalt nitrate hexahydrate and 8.68 g of cerium nitrate hexahydrate to 500 mL of distilled water. A precipitate was generated by dripping the aqueous solution into an aqueous solution obtained by dissolving 73.0 g of potassium hydroxide in 500 mL of distilled water that was being agitated. The precipitate was filtered, was washed in water, and was then dried at 120°C overnight. Catalyst 23 was obtained by pulverizing the dried precipitate, filling a ring furnace with the resulting product, and reducing the resulting product at 600°C for an hour, using 10% by volume of a hydrogen gas (diluted with nitrogen).

«Experimental Example III-24»

First, 4 g of catalyst 12 prepared in Experimental Example III-12 was added to an aqueous solution obtained by dissolving 0.0295 g of cesium nitrate in 20 mL of distilled water, and the resulting product was heated on a hot-water bath to dryness, whereby catalyst 12 was impregnated with the cesium nitrate. The impregnated product was dried at 120°C overnight. Catalyst 24 was obtained by pulverizing the dried impregnated product, filling a ring furnace with the resulting product, and reducing the resulting product at 600°C for an hour, using 10% by volume of a hydrogen gas (diluted with nitrogen).

<<Experimental Example III-25>>

In the same manner as described in Experimental Example III-24, except that instead of using 0.0295 g of cesium nitrate in Experimental Example III-24, 0.0593 g of cesium nitrate was used, catalyst 25 was obtained.

<<Experimental Example III-26>>

In the same manner as described in Experimental Example III-24, except that instead of using 0.0295 g of cesium nitrate in Experimental Example 111-24, 0.12 g of cesium nitrate was used, catalyst 26 was obtained.

<<Experimental Example III-27>>

In the same manner as described in Experimental Example III-24, except that instead of using 0.0295 g of cesium nitrate in Experimental Example III-24, 0.244 g of cesium nitrate was used, catalyst 27 was obtained.

<<Experimental Example III-28>>

In the same manner as described in Experimental Example III-24, except that instead of using 0.0295 g of cesium nitrate in Experimental Example 111-24, 0.374 g of cesium nitrate was used, catalyst 28 was obtained.

<<Experimental Example III-29>>

In the same manner as described in Experimental Example III-24, except that instead of using 0.0295 g of cesium nitrate in Experimental Example III-24, 0.652 g of cesium nitrate was used, catalyst 29 was obtained.

<<Experimental Example III-30>>

First, 4 g of catalyst 11 prepared in Experimental Example III-11 was added to an aqueous solution obtained by dissolving 0.0295 g of cesium nitrate in 20 mL of distilled water, and the resulting product was heated on a hot-water bath to dryness, whereby catalyst 11 was impregnated with the cesium nitrate. The impregnated product was dried at 120°C overnight. Catalyst 30 was obtained by pulverizing the dried impregnated product, filling a ring furnace with the resulting product, and reducing the resulting product at 600°C for an hour, using 10% by volume of a hydrogen gas (diluted with nitrogen).

<<Experimental Example III-31>>

First, 4 g of catalyst 12 prepared in Experimental Example III-12 was added to an aqueous solution obtained by dissolving 0.052 g of potassium nitrate in 20 mL of distilled water, and the resulting product was heated on a hot-water bath to dryness, whereby catalyst 12 was impregnated with the potassium nitrate. The impregnated product was dried at 120°C overnight. Catalyst 31 was obtained by pulverizing the dried impregnated product, filling a ring furnace with the resulting product, and reducing the resulting product at 600°C for an hour, using 10% by volume of a hydrogen gas (diluted with nitrogen).

<<Experimental Example III-32>>

In the same manner as described in Experimental Example III-31, except that in Experimental Example 111-31, 0.104 g of potassium nitrate was used instead of 0.052 g of potassium nitrate, catalyst 32 was obtained.

<<Experimental Example III-33>>

In the same manner as described in Experimental Example III-31, except that instead of using 0.052 g of potassium nitrate in Experimental Example 111-31, 0.211 g of potassium nitrate was used, catalyst 33 was obtained.

<<Experimental Example III-34>>

First, 4 g of catalyst 12 prepared in Experimental Example III-12 was added to an aqueous solution obtained by dissolving 0.077 g of barium nitrate in 20 mL of distilled water, and the resulting product was heated on a hot-water bath to dryness, whereby catalyst 12 was impregnated with the barium nitrate. The impregnated product was dried at 120°C overnight. Catalyst 34 was obtained by pulverizing the dried impregnated product, filling a ring furnace with the resulting product, and reducing the resulting product at 600°C for an hour, using 10% by volume of a hydrogen gas (diluted with nitrogen).

<<Experimental Example III-35>>

In the same manner as described in Experimental Example III-34, except that instead of using 0.077 g of barium nitrate in Experimental Example III-34, 0.155 g of barium nitrate was used, catalyst 35 was obtained.

<<Experimental Example III-36>>

In the same manner as described in Experimental Example III-34, except that instead of using 0.077 g of barium nitrate in Experimental Example III-34, 0.846 g of barium nitrate was used, catalyst 36 was obtained.

<<Experimental Example III-37>>

First, 4 g of catalyst 12 prepared in Experimental Example III-12 was added to an aqueous solution obtained by dissolving 0.127 g of strontium nitrate in 20 mL of distilled water, and the resulting product was heated on a hot-water bath to dryness, whereby catalyst 12 was impregnated with the strontium nitrate. The impregnated product was dried at 120°C overnight. Catalyst 37 was obtained by pulverizing the dried impregnated product, filling a ring furnace with the resulting product, and reducing the resulting product at 600°C for an hour, using 10% by volume of a hydrogen gas (diluted with nitrogen).

<<Experimental Example III-38>>

First, 4 g of catalyst 13 prepared in Experimental Example III-13 was added to an aqueous solution obtained by dissolving 0.0593 g of cesium nitrate in 20 mL of distilled water, and the resulting product was heated on a hot-water bath to dry and harden, whereby catalyst 13 was impregnated with the cesium nitrate. The impregnated product was dried at 120°C overnight. Catalyst 38 was obtained by pulverizing the dried impregnated product, filling a ring furnace with the resulting product, and reducing the resulting product at 600°C for an hour, using 10% by volume of a hydrogen gas (diluted with nitrogen).

<<Physical Property Measurements of Ammonia Decomposition Catalysts>>

Regarding catalysts 1 to 38 obtained in Experimental Example III-1 to III-38, the catalyst compositions were determined, and the specific surface areas and the crystallite sizes were measured. The results are shown in Table 11.

[Table 11]

| | Catalyst composition | Specific surface area ($m^2$/g) | Crystallite sizes (nm) | |
| --- | --- | --- | --- | --- |
| | | | Metal particles | Oxide particles |
| Catalyst 1* | $Ni/Al_2O_3$ | 152 | 4 | 5 |
| Catalyst 2* | 11.1 wt% $Cs/Ni/Al_2O_3$ | 104 | 4 | 5 |
| Catalyst 3* | 16.6 wt% $Cs/Ni/Al_2O_3$ | 91 | 4 | 5 |
| Catalyst 4* | $Ni/Al_2O_3$ | 140 | 5 | 5 |

(continued)

| | Catalyst composition | Specific surface area ($m^2$/g) | Crystallite sizes (nm) | |
|---|---|---|---|---|
| | | | Metal particles | Oxide particles |
| Catalyst 5* | $Ni/Al_2O_3$ | 131 | 8 | 5 |
| Catalyst 6* | $Ni/Al_2O_3$ | 57 | 10 | 46 |
| Catalyst 7* | $CO/Al_2O_3$ | 54 | 5 | 46 |
| Catalyst 8* | $Ni/MgO/Al_2O_3$ | 53 | 10 | 46 |
| Catalyst 9* | $Ni/WO_3/Al_2O_3$ | 56 | 12 | 46 |
| Catalyst 10* | $MSO_4/Al_2O_3$ | 55 | - | 46 |
| Catalyst 11 | $Ni-CeZrO_x$ | 58 | 17 | 5 |
| Catalyst 12 | $Co-CeZrO_x$ | 32 | 24 | 5 |
| Catalyst 13 | $Fe-CeZrO_x$ | 34 | 52 | 7 |
| Catalyst 14 | $Fe-CeZrO_x$ | 28 | 60 | 10 |
| Catalyst 15 | $Fe/Ni-CeZrO_x$ | 51 | 19 | 5 |
| Catalyst 16 | $Co/Zn-CeZrO_x$ | 52 | 24 | 4 |
| Catalyst 17 | $Co-CeYO_x$ | 43 | 24 | 6 |
| Catalyst 18 | $Co-CeLaO_x$ | 41 | 12 | 4 |
| Catalyst 19 | $Co-CeZrO_x$ | 83 | 28 | 7 |
| Catalyst 20 | $Co-CeZrO_x$ | 46 | 23 | 5 |
| Catalyst 21* | $Co-ZrO_2$ | 44 | 21 | 4 |
| Catalyst 22 | $Co-CeZrO_x$ | 24 | 21 | 4 |
| Catalyst 23* | $Co-CeO_2$ | 42 | 34 | 10 |
| Catalyst 24 | 0.5 wt% $Cs/Co-CeZrO_x$ | 29 | 26 | 7 |
| Catalyst 25 | 1 wt% $Cs/Co-CeZrO_x$ | 28 | 26 | 7 |
| Catalyst 26 | 2 wt% $Cs/Co-CeZrO_x$ | 25 | 26 | 7 |
| Catalyst 27 | 4 wt% $Cs/Co-CeZrO_x$ | 21 | 26 | 7 |
| Catalyst 28 | 6 wt% $Cs/Co-CeZrO_x$ | 19 | 26 | 7 |
| Catalyst 29 | 10 wt% $Cs/Co-CeZrO_x$ | 14 | 26 | 7 |
| Catalyst 30 | 1 wt% $Cs/Ni-CeZrO_x$ | 56 | 18 | 6 |
| Catalyst 31 | 0.5 wt% $K/Co-CeZrO_x$ | 28 | 26 | 7 |
| Catalyst 32 | 1 wt% $K/Co-CeZrO_x$ | 24 | 26 | 7 |
| Catalyst 33 | 2 wt% $K/Co-CeZrO_x$ | 19 | 26 | 7 |
| Catalyst 34 | 1 wt% $Ba/Co-CeZrO_x$ | 30 | 26 | 7 |
| Catalyst 35 | 2 wt% $Ba/Co-CeZrO_x$ | 27 | 26 | 7 |
| Catalyst 36 | 10 wt% $Ba/Co-CeZrO_x$ | 21 | 26 | 7 |
| Catalyst 37 | 1.3 wt% $Sr/Co-CeZrO_x$ | 20 | 26 | 7 |
| Catalyst 38 | 1 wt% $Cs/Fe-CeZrO_x$ | 32 | 52 | 8 |
| * Reference Example | | | | |

<<Ammonia Decomposition Reaction>>

Using each of catalysts 1 to 38 obtained in Experimental Example III-1 to III-38 and ammonia having a purity of 99.9% or higher by volume, ammonia decomposition reaction was carried out to decompose the ammonia into nitrogen and hydrogen.

In this connection, the ammonia decomposition rates were measured (calculated by the formula below) under the conditions: the space velocity of ammonia was 6,000 hr$^{-1}$; the reaction temperature was 400°C, 450°C, 500°C, 550°C, 600°C, or 700°C; and the reaction pressure was 0.101325 MPa (normal pressure). The results are shown in Table 12.

[Formula 4]

$$\text{Ammonia decomposition rate (\%)} = [(\text{ammonia concentration at reactor inlet}) -$$

$$(\text{ammonia concentration at reactor outlet})] \times 100 \ / \ (\text{ammonia concentration at reactor}$$

$$\text{inlet})$$

[Table 12]

| | Catalyst composition | Ammonia decomposition rates | | | | | |
|---|---|---|---|---|---|---|---|
| | | 700°C | 600°C | 550°C | 500°C | 450°C | 400°C |
| Catalyst 1* | Ni/Al$_2$O$_3$ | | | | 32.9% | 12.5% | - |
| Catalyst 2* | 11.1 wt% Cs/Ni/Al$_2$O$_3$ | | | | 33.8% | 13.1% | - |
| Catalyst 3* | 16.6 wt% Cs/Ni/Al$_2$O$_3$ | | | | 47.6% | 19.8% | 8.5% |
| Catalyst 4* | Ni/Al$_2$O$_3$ | | | | 14.6% | 5.6% | - |
| Catalyst 5* | Ni/Al$_2$O$_3$ | | | | 30.4% | 10.6% | - |
| Catalyst 6* | Ni/Al$_2$O$_3$ | | | | 36.7% | 15.0% | - |
| Catalyst 7* | Co/Al$_2$O$_3$ | | | | 29.2% | 12.1% | - |
| Catalyst 8* | Ni/MgO/Al$_2$O$_3$ | 97.4% | 94.4% | - | 28.2% | 7.9% | 0.9% |
| Catalyst 9* | Ni/WO$_3$/Al$_2$O$_3$ | | | | 8.5% | 3.2% | - |
| Catalyst 10* | NiSO$_4$/Al$_2$O$_3$ | 71.4% | 14.8% | - | - | - | - |
| Catalyst 11 | Ni-CeZrO$_x$ | | | | 75.1% | 40.6% | 14.9% |
| Catalyst 12 | Co-CeZrO$_x$ | | | | 100.0% | 66.8% | 21.4% |
| Catalyst 13 | Fe-CeZrOx | | | | 45.5% | 19.5% | - |
| Catalyst 14 | Fe-CeZrO$_x$ | | | | 42.6% | 15.1% | 2.2% |
| Catalyst 15 | Fe/Ni-CeZrO$_x$ | | 100.0% | 92.1% | 50.8% | 17.9% | - |
| Catalyst 16 | Co/Zn-CeZrO$_x$ | | 100.0% | 95.4% | 58.9% | 23.7% | - |
| Catalyst 17 | Co-CeYO$_x$ | | 100.0% | - | 79.5% | 31.9% | - |
| Catalyst 18 | Co-CeLaO$_x$ | | 100.0% | - | 79.5% | 36.9% | - |
| Catalyst 19 | Co-CeZrO$_x$ | | | | 82.8% | 37.7% | - |
| Catalyst 20 | Co-CeZrO$_x$ | | | | 100.0% | 47.0% | - |
| Catalyst 21* | Co-ZrO$_2$ | | | | 100.0% | 40.7% | - |
| Catalyst 22 | Co-CeZrO$_x$ | | | | 100.0% | 49.2% | - |
| Catalyst 23* | Co-CeO$_2$ | | | | 85.2% | 40.9% | - |

(continued)

| | Catalyst composition | Ammonia decomposition rates | | | | | |
|---|---|---|---|---|---|---|---|
| | | 700°C | 600°C | 550°C | 500°C | 450°C | 400°C |
| Catalyst 24 | 0.5 wt% Cs/Co-CeZrO$_x$ | | | | 100.0% | 75.9% | 25.2% |
| Catalyst 25 | 1 wt% Cs/Co-CeZrO$_x$ | | | | 100.0% | 73.4% | 27.6% |
| Catalyst 26 | 2 wt% Cs/Co-CeZrO$_x$ | | | | 100.0% | 88.4% | 30.0% |
| Catalyst 27 | 4 wt% Cs/Co-CeZrO$_x$ | | | | 100.0% | 89.0% | 21.4% |
| Catalyst 28 | 6 wt% Cs/Co-CeZrO$_x$ | | | | 100.0% | 54.6% | 17.6% |
| Catalyst 29 | 10 wt% Cs/Co-CeZrO$_x$ | | | | 81.7% | 32.8% | 9.8% |
| Catalyst 30 | 1 wt% Cs/Ni-CeZrO$_x$ | | | | 100.0% | 72.2% | 25.2% |
| Catalyst 31 | 0.5 wt% K/Co-CeZrO$_x$ | | | | 100.0% | 92.7% | 38.4% |
| Catalyst 32 | 1 wt% K/Co-CeZrO$_x$ | | | | 100.0% | 97.3% | 37.6% |
| Catalyst 33 | 2 wt% K/Co-CeZrO$_x$ | | | | 100.0% | 85.5% | 27.1% |
| Catalyst 34 | 1 wt% Ba/Co-CeZrO$_x$ | | | | 100.0% | 77.1% | 30.3% |
| Catalyst 35 | 2 wt% Ba/Co-CeZrO$_x$ | | | | 100.0% | 90.3% | 36.9% |
| Catalyst 36 | 10 wt% Ba/Co-CeZrO$_x$ | | | | 100.0% | 82.9% | 31.9% |
| Catalyst 37 | 1.3 wt% Sr/Co-CeZrO$_x$ | | | | 97.6% | 58.0% | 22.9% |
| Catalyst 38 | 1 wt% Cs/Fe-CeZrO$_x$ | | | | 81.2% | 32.2% | 10.0% |
| * Reference Example | | | | | | | |

As can be seen from Table 12, with some exceptions, catalysts 1 to 38 can efficiently decompose high-concentration ammonia, which has a purity of 99.9% or higher by volume, into nitrogen and hydrogen at relatively low temperatures, i.e., from 400°C to 600°C, and at a high space velocity, i.e., 6,000 h$^{-1}$. Further, each of catalysts 11, 12, and 15 to 37 contains cobalt or nickel as an iron group metal and ceria, zirconia, a solid solution of ceria and zirconia, a solid solution of ceria and yttria, or a solid solution of ceria and lanthanum oxide as a metal oxide, and therefore has a relatively high ammonia decomposition rate. Further, when catalysts 24 to 29, catalysts 31 to 33, and catalysts 34 to 36 are compared to one another, it is found that if an appropriate amount of cesium, potassium, or barium (specifically, from 2% to 4% by mass of cesium, about 1% by mass of potassium, or about 2% by mass of barium) as an additional component is added to cobalt as an iron group metal and a solid solution of ceria and zirconia as a metal oxide, the ammonia decomposition rate can be improved. In addition, when catalysts 13 to 14 and catalyst 38 are compared to one another, it is found that if an appropriate amount of cesium (specifically, 1% by mass) as an additional component is added to iron as an iron group metal and a solid solution of ceria and zirconia as a metal oxide, the ammonia decomposition rate can be improved.

The present invention relates to ammonia decomposition, and makes a considerable contribution to, for example, an environmental field where a gas containing ammonia is deodorized by treatment, and an energy field where ammonia is decomposed into nitrogen and hydrogen to obtain hydrogen.

**Claims**

1. Use of a catalyst comprising a catalytically active component containing at least one kind of iron group metal selected from the group consisting of iron, cobalt, and nickel; and at least one metal oxide selected from the group consisting of a solid solution of ceria and zirconia, a solid solution of ceria and yttria, and a solid solution of ceria and lanthanum oxide for decomposing ammonia into nitrogen and hydrogen.

2. The use according to claim 1, wherein the catalytically active component further comprises an alkali metal and/or an alkaline earth metal.

**Patentansprüche**

1. Verwendung eines Katalysators, umfassend eine katalytisch aktive Komponente, enthaltend mindestens eine Art eines Metalls der Eisengruppe, ausgewählt aus der Gruppe, bestehend aus Eisen, Kobalt und Nickel; und mindestens ein Metalloxid, ausgewählt aus der Gruppe, bestehend aus einem Mischkristall von Cerdioxid und Zirkoniumdioxid, einem Mischkristall von Cerdioxid und Yttriumoxid und einem Mischkristall von Cerdioxid und Lanthanoxid, zur Zersetzung von Ammoniak in Stickstoff und Wasserstoff.

2. Verwendung nach Anspruch 1, wobei die katalytisch aktive Komponente weiter ein Alkalimetall und/oder ein Erdalkalimetall umfasst.

**Revendications**

1. Utilisation d'un catalyseur comprenant un composant catalytiquement actif contenant au moins un type de métal du groupe du fer, choisi parmi le groupe consistant en le fer, le cobalt et le nickel ; et au moins un oxyde métallique choisi parmi le groupe consistant en une solution solide d'oxyde de cérium et de zircone, une solution solide d'oxyde de cérium et d'oxyde d'yttrium, et une solution solide d'oxyde de cérium et d'oxyde de lanthane pour décomposer l'ammoniac en azote et hydrogène.

2. Utilisation selon la revendication 1, dans lequel le composant catalytiquement actif comprend en outre, un métal alcalin et/ou un métal alcalino-terreux.

[FIG. 1]

[FIG. 2]

[FIG. 3]

[FIG. 4]

[FIG. 5]

[FIG. 6]

## REFERENCES CITED IN THE DESCRIPTION

### Patent documents cited in the description

- JP SHO6456301 B
- JP 2004195454 A
- JP HEI1119341 B
- JP 2001300314 A
- JP HEI2198639 B
- US 2001031236 A1
- GB 1000772 A

### Non-patent literature cited in the description

- Ammonia decomposition characteristics of rare-earth oxide-iron type composites. **MASAHIRO MASUDA.** the proceedings entitled "Rare Earths" of the 18th Rare Earth Symposium, Organizer: Rare Earth Society of Japan. Chuo University, 10 May 2001, 122-123
- *Catalysis Letters,* 2007, vol. 118 (1-2), 36-49